# EUROPÄISCHE PATENTSCHRIFT

(11) **EP 3 877 157 B1**
(45) Veröffentlichungstag und Bekanntmachung des Hinweises auf die Patenterteilung: **08.05.2024**
(21) Anmeldenummer: 19797561.8
(22) Anmeldetag: 25.10.2019
(51) Int. Cl.: B29C 64/40, B33Y 10/00, B29C 64/165, B29C 64/188, B29C 70/58

(54) **VERFAHREN ZUM HERSTELLEN EINES DREIDIMENSIONALEN FORMGEGENSTANDS MITTELS SCHICHTWEISEM MATERIALAUFTRAG**
METHOD OF PRODUCING A THREE-DIMENSIONAL SHAPED ARTICLE BY MEANS OF LAYER-BY-LAYER MATERIAL APPLICATION
PROCÉDÉ DE FABRICATION D'UN OBJET MOULÉ TRIDIMENSIONNEL PAR DÉPÔT DE COUCHES SUCCESSIVES DE MATIÈRE

(30) Priorität: 06.11.2018 DE 102018008704; 09.11.2018 DE 102018008808
(43) Veröffentlichungstag der Anmeldung: 15.09.2021
(73) Patentinhaber: 3D Systems GmbH, 64546 Mörfelden-Walldorf (DE)
(72) Erfinder: MATHEA, Hans, 76344 Eggenstein-Leopoldshafen (DE)
(74) Vertreter: Huwer, Andreas
(86) Internationale Anmeldenummer: PCT/EP2019/000298
(87) Internationale Veröffentlichungsnummer: WO 2020/094246

(56) Entgegenhaltungen:
- WO-A1-2015/105047
- WO-A1-2018/067901
- DE-A1-102015 212 569
- DE-A1-102017 001 276
- US-A1- 2013 011 562
- US-A1- 2017 348 902

## Beschreibung

Die Erfindung betrifft ein Verfahren zum Herstellen eines dreidimensionalen Formgegenstands mittels schichtweisem Materialauftrag, wobei Geometriedaten für den Formgegenstand, ein Trägerteil mit einer Basisfläche zur Aufnahme des dreidimensionalen Formgegenstands, ein verfestigbares flüssiges oder fließfähiges erstes Material und ein verfestigbares, flüssiges, fließfähiges, pastöses oder pulverförmiges zweites Material bereitgestellt werden.

Bei einem derartigen, aus der Praxis bekannten Verfahren werden als erstes und zweites Material flüssige Polymere verwendet, die durch Einwirkung von ultravioletter Strahlung verfestigbar sind. Bei dem vorbekannten Verfahren wird auf die Basisfläche des Trägerteils zunächst eine erste Materialschicht aufgebracht, indem tröpfchenförmige Materialportionen des ersten und zweiten Materials mit Hilfe eines Tintenstrahldruckers auf unterschiedliche Stellen der Basisfläche aufgesprüht werden. Die Stellen an denen die aus den unterschiedlichen Materialien bestehenden Materialtröpfchen auf die Basisfläche aufgetragen werden, werden in Abhängigkeit von bereitgestellten Geometriedaten für den herzustellenden Formgegenstand derart gewählt, dass die aus dem zweiten Material bestehenden Bereiche der Materialschicht eine unterste Schicht des herzustellenden Formgegenstands bilden. Das erst Material dient als Stützmaterial, welches an Stellen auf die Basisfläche aufgebracht wird, an denen kein zweites Material aufgetragen wird und über denen der Formgegenstand nach dem Auftragen einer weiteren Materialschicht des ersten Materials Überhänge aufweist, die bis zum Verfestigen aller Materialschichten durch das Stützmaterial unterstützt werden sollen. Die so erhaltene unterste Materialschicht wird in einem weiteren Schritt mit ultravioletter Strahlung bestrahlt, um in dem ersten und dem zweiten Material enthaltene Polymere durch Vernetzen zu verfestigen.

Nachdem die unterste Materialschicht fertiggestellt wurde, werden auf diese in entsprechender Weise weitere Materialschichten aufgebracht und verfestigt, bis alle Schichten des Formgegenstands hergestellt und verfestigt sind. Danach wird der so erhaltene Schichtstapel mit dem Lösungsmittel in Kontaktgebracht, bis sich das erste Material darin aufgelöst hat. Das zweite Material ist in dem Lösungsmittel nicht löslich.

Das vorbekannte Verfahren ermöglicht es zwar, dreidimensionale Formgegenstände als Prototypen oder in kleinen Stückzahlen vergleichsweise kostengünstig herzustellen. Durch die Verwendung UV vernetzbarer Polymere und die hohe Auflösung beim Drucken wird eine gute Oberflächenqualität ermöglicht. Für das hochaufgelöste 3D-Drucken ist jedoch eine sehr niedrige Viskosität der Polymere erforderlich, damit diese durch feine Düsen hindurch auf die Basisfläche bzw. eine darauf befindliche, verfestigte Materialschicht aufgetragen werden können.

Beim Tintenstrahldruckverfahren (InkJet-Verfahren) können die Düsen üblicherweise eine maximale Viskosität von 25 mPa·s verarbeiten. Höhere Viskositäten sind in der Regel nicht verjettbar. Die aus solchen Materialien erstellte Objekte sind nur minimal belastbar und können lediglich als Anschauungsobjekt dienen.

Aus der Praxis ist auch bereits bekannt, eine Spritzgießform für eine Spritzgießmaschine mittels schichtweisem Materialauftrag aus einem verfestigbaren flüssigen Polymer mittels eines Tintenstrahl-3D-Druckers herzustellen. Die Spritzgießform hat zwei Formteile, zwischen denen eine Kavität gebildet ist, die eine dreidimensionale Negativform eines in der Spritzgießmaschine herzustellenden Formgegenstands aufweist. Die Spritzgießform wird in dem 3D-Drucker durch Auftragen einer Vielzahl von Schichten aus dem Polymer hergestellt, welches mit Hilfe von Düsen in flüssiger Form auf eine Basisfläche bzw. eine darauf zuvor aufgebrachte, verfestigte Materialschicht aufgetragen wird. Nach dem Auftragen jeder Materialschicht wird das noch flüssige Polymer jeweils mit UV-Licht bestrahlt, um es zu vernetzen und dadurch die betreffende Materialschicht zu verfestigen. Dann werden in entsprechender Weise weitere Materialschichten aufgetragen und verfestigt, bis die Spritzgießform fertiggestellt ist. Anschließend wird die Spritzgießform aus dem 3D-Drucker entnommen und in die Spritzgießmaschine eingebaut, um durch in der Spritzgießform vorgesehene Einspritzöffnungen hindurch einen sich von dem Polymer unterscheidenden, heißen Kunststoff in die Kavität einzuspritzen. Nach dem die Kavität mit dem Kunststoff befüllt und der Kunststoff abgekühlt ist, wird die Spritzgießform geöffnet und der Formgegenstand wird mit Hilfe von Auswerfern aus der Kavität ausgeworfen. Das Verfahren hat den Nachteil, dass im 3D Druck hergestellte Formen wegen der hohen Temperatur des Befüll-Materials nur eine sehr begrenzte Lebensdauer haben und nach ca. 10 bis 100 Spritzgießvorgängen erneuert werden müssen. Ferner ist der Einbau der Spritzgießform in die Spritzgießmaschine relativ zweitaufwändig ist. Die ist insbesondere bei einer Einzelanfertigung eines Formgegenstands ungünstig.

Bei anderen bekannten Technologien, die Feststoffe als Baumaterial verwenden, werden meistens Thermoplaste geschmolzen und durch eine Düse, oder in Form von Pulver im Sinter-Verfahren schichtweise aufgetragen. Die recht gute Belastbarkeit geht allerdings auf Kosten der Druckzeit (sehr langsam), oder einer niedrigen Auflösung bzw. Oberflächenqualität.

Einen leichten Vorteil bietet das Stereolithografie-Verfahren, mit dem auch höhere Viskositäten verarbeiten werden können. Dieser Vorteil ergibt sich aus der Tatsache, dass die Materialien nicht durch eine Düse versprüht werden müssen, sondern mit einem externen UV-Strahl nach Vorgabe in einem Polymer-Behälter vernetzt werden. Auch sogenannte zwei Komponenten UV-Polymere mit noch gesteigerten Eigenschaften lassen sich damit verarbeiten. Dadurch wird auch eine bessere Belastbarkeit der Formgegenstände erreicht. Die Nachteile sind allerdings: große Materialmengen zum Erstelleneines Objekts, limitierte Aushärtungszeit des 2K-Gemischs, hoher Materialverbrauch (erlaubt keinen erneuten Einsatz der nicht verbrauchten Polymere). All das treibt die die Kosten der Teileherstellung deutlich in die Höhe.

Bis auf das InkJet-Verfahren weisen alle bekannten 3D Technologien noch ein anderes gravierendes Manko auf: sie sind nicht Multimaterialfähig. Dies bedeutet, dass lediglich ein Materialtyp gleichzeitig verwendet werden kann. Hierdurch wird die Verwendbarkeit des Verfahrens in der Industrie sehr limitiert.

Die WO 2015/105047 A1 offenbart ein Verfahren zum Herstellen eines dreidimensionalen Formgegenstands mittels schichtweisem Materialauftrag, wobei Geometriedaten für den Formgegenstand, ein Trägerteil mit einer Basisfläche zur Aufnahme des dreidimensionalen Formgegenstands, ein verfestigbares flüssiges oder fließfähiges erstes Material und ein verfestigbares, flüssiges, fließfähiges, pastöses oder pulverförmiges zweites Material und ein Lösungsmittel bereitgestellt werden. Das zweite Material umfasst mindestens eine durch Behandlung mit Energie vernetzbare Hauptkomponente und einen thermisch aktivierbaren, latenten Härter, mittels dem durch Wärmeeinwirkung eine chemische Vernetzung der Hauptkomponente auslösbar ist.

Bei dem Verfahren werden das erste und das zweite Material gleichzeitig auf die Basisflache und/oder eine darauf befindliche verfestigte Materialschicht des dreidimensionalen Formgegenstands aufgebracht, um eine aus dem ersten Material bestehende Schicht und eine an diese angrenzende, aus dem zweiten Material bestehende Schicht zu erzeugen. Der an die aus dem ersten Material bestehende Schicht angrenzende äußere Rand der aus dem zweiten Material bestehenden Schicht bildet später die Außenkontur des fertigen Formgegenstands. In einem weiteren Verfahrensschritt werden die aus dem ersten und zweiten Material bestehenden Schichten verfestigt.

Die Schicht aus dem zweiten Material umgrenzt einen Freiraum, der nach dem Verfestigen der aus dem zweiten Material bestehenden Schicht mit einem Composit-Material befüllt wird, das pulverförmige Partikel und ein wasserlösliches Harz enthält, die vor dem Einfüllen in den Freiraum durch Wärmeeinwirkung verflüssigt werden. Mit einem Rakel wird überschüssiges flüssiges Composit-Material auf das Niveau der zuvor verfestigten Schichten abgetragen. Danach wird das Composit-Material durch Zugabe eines Binders verfestigt. Die vorstehend genannten Schritte werden wiederholt, um in entsprechender Weise weitere Formgegenstandsschichten zu erzeugen. Nachdem sämtliche Schichten des Formgegenstands hergestellt sind, werden die aus dem ersten Material bestehenden Schichten in einem Lösungsmittel gelöst, um sie von dem Formgegenstand zu entfernen.

Aufgabe der Erfindung ist daher, ein Verfahren der eingangs genannten Art anzugeben, mit dem mechanisch stabile und belastbare dreidimensionale Formgegenstände mit hoher Auflösung gedruckt werden können.

Diese Aufgabe wird mit den Merkmalen des Patentanspruchs 1 gelöst. Erfindungsgemäß ist ein Verfahren zum Herstellen eines dreidimensionalen Formgegenstands mittels schichtweisem Materialauftrag vorgesehen, bei dem Geometriedaten für den Formgegenstand, ein Trägerteil mit einer Basisfläche zur Aufnahme des dreidimensionalen Formgegenstands und ein verfestigbares, flüssiges oder fließfähiges erstes Material, ein verfestigbares, flüssiges, fließfähiges, pastöses oder pulverförmiges zweites Material bereitgestellt werden, wobei das zweite Material mindestens eine durch Behandlung mit Energie vernetzbare Hauptkomponente und einen thermisch aktivierbaren, latenten Härter umfasst, mittels dem durch Wärmeeinwirkung eine chemische Vernetzung der Hauptkomponente auslösbar ist,
a) wobei zur Bildung einer Negativform-Schicht Materialportionen des fließfähigen ersten Materials derart entsprechend den Geometriedaten auf die Basisfläche und/oder eine darauf befindliche verfestigte Materialschicht des dreidimensionalen Formgegenstands aufgebracht werden, dass die Negativform-Schicht an ihrer der Basisfläche abgewandten Oberfläche mindestens eine Kavität hat, welche eine Negativform einer herzustellenden Materialschicht des Formgegenstands aufweist,
b) wobei die Negativform-Schicht verfestigt wird,
c) wobei zur Bildung einer Formgegenstands-Schicht die Kavität derart mit dem zweiten Material befüllt wird, dass die Negativform als Positivform auf die Formgegenstands-Schicht übertragen wird,
d) wobei die Hauptkomponente des in die Kavität eingefüllten zweiten Materials durch Behandlung mit Energie teilvernetzt und verfestigt wird,
e) wobei über eine in einem vorbestimmten Abstand zur Basisfläche angeordnete Ebene überstehende Bereiche der verfestigten Negativform-Schicht und/oder der verfestigten Formgegenstands-Schicht durch Materialabtrag entfernt werden,
f) wobei die Schritte a) bis e) mindestens einmal wiederholt werden,
g) wobei die Hauptkomponente des aus den Formgegenstands-Schichten gebildeten Formgegenstands durch eine Wärmebehandlung weiter vernetzt und derart verfestigt wird, dass das zweite Material eine höhere Festigkeit aufweist als das verfestigte erste Material und/oder das teilvernetzte zweite Material, und
h) wobei die Negativform-Schichten vor, während und/oder nach dem Durchführen der Wärmebehandlung von dem Formgegenstand entfernt werden.

Erfindungsgemäß ist also ein Hybridverfahren vorgesehen, bei dem Materialien mit unterschiedlichen Eigenschaften mittels unterschiedlicher Druck-Verfahren verarbeitet und/oder mittels unterschiedlicher Druckvorrichtungen auf die Basisfläche bzw. eine darauf befindliche, verfestigte Materialschicht des dreidimensionalen Formgegenstands schichtweise aufgetragen werden. Dies kann in einem durchgehenden 3D-Druckprozess erfolgen, d.h. das Verfahren kann komplett in einer 3D-Druckstation durchgeführt werden. Außerhalb der 3D-Druckstation ist kein weiterer Druckprozess notwendig.

Das erste Material kann sehr niedrigviskos bzw. dünnflüssig oder hochfließfähig sein, weil es lediglich zur Herstellung einer Form für das zweite Material dient. Durch die niedrige Viskosität bzw. die hohe Fließfähigkeit, die das erste Material während des Auftragens auf die Basisfläche bzw. eine darauf befindliche, bereits verfestigte Materialschicht des dreidimensionalen Formgegenstands aufweist, kann die Form mittels eines digitalen Druckverfahrens mit hoher Auflösung und Oberflächenqualität gedruckt werden, indem eine Vielzahl entsprechend kleiner Materialportionen des ersten Materials auf die Basisfläche bzw. die darauf befindliche, verfestigte Materialschicht des dreidimensionalen Formgegenstands aufgetragen wird.

An die mechanische Stabilität und Festigkeit der aus dem ersten Material bestehenden Materialschicht der Form werden nur geringe Anforderungen gestellt, da die Form lediglich das zweite Material tragen und eventuelle, bei dem zum Auftragen des zweiten Materials vorgesehenen Druckverfahren auf das erste Material ausgeübten Kräfte abstützen muss. Durch die Verfestigung des ersten Materials erreicht dieses eine ausreichende Festigkeit, um als Formgeber für das zweite Material dienen zu können. Die mechanische Festigkeit des im verfestigten Zustand befindlichen ersten Materials hat keinen Einfluss auf die mechanische Stabilität des aus den verfestigten Schichten des zweiten Materials gebildeten Formgegenstands, weil das erste verfestigte Material nach Auftragen aller Materialschichten von dem Formgegenstand entfernt wird.

Das zweite Material ist das eigentliche Baumaterial für den Formgegenstand und kann andere Eigenschaften, vor allem eine höhere Viskosität aufweisen als das erste Material. Es kann z.B. mit verstärkenden Additiven, wie Fasern und/oder anderen Feststoffpartikeln gefüllt werden. Da das zweite Material durch Abformen der aus dem ersten Material hergestellten Form geometrisch geformt wird, ist es zum Erzielen einer hohen Druckauflösung nicht notwendig, kleine Materialportionen des zweiten Materials auf die Basisfläche bzw. die darauf befindliche, verfestigte Materialschicht des dreidimensionalen Formgegenstands aufzubringen. Vielmehr kann auch mit einem hochviskosen zweiten Material gearbeitet werden. Hierdurch kann eine hohe mechanische Stabilität und Festigkeit des Formgegenstands erreicht werden. Bei Bedarf ist es sogar möglich, dass das zweite Material ein Gemisch aus mindestens zwei unterschiedlichen Stoffen und/oder wenigstens ein Additiv, wie z.B. Fasern oder andere Stoffe zur Erhöhung der Materialfestigkeit enthält. Das zweite Material kann auch mit einem digitalen Druckverfahren grob selektiv bzw. teilselektiv auf die Basisfläche bzw. die darauf befindliche, verfestigte Materialschicht des dreidimensionalen Formgegenstands aufgetragen werden, also durch Auftragen einer Vielzahl von Materialportionen auf unterschiedliche Stellen, die entsprechend den für den Formgegenstand bereitgestellten Geometriedaten gewählt werden. Um eine lückenfreie Befüllung der Kavitäten an deren Konturen zu gewährleisten, wird das zweite Material in die Geometriedaten-Bereiche konturübergreifend eingefüllt. Das führt dazu, dass die Menge des zweiten Materials immer etwas größer ist als für die Befüllung der Kavität nötig wäre. Es ist auch möglich, das zweite Material mit einem analogen Druckverfahren auf die Basisfläche bzw. die darauf befindliche, verfestigte Materialschicht des dreidimensionalen Formgegenstands aufzutragen. Eine dem Druckmodul vorgeschaltete Mischvorrichtung erlaubt eine graduierte Materialeigenschaft mittels eines einzigen Druckmoduls. Dazu werden - je nach Bedarf - mindestens zwei Material-Komponenten in einem entsprechend angepassten Verhältnis direkt vor dem Einfüllen in das Druckmodul gemischt. So kann z.B. eine harte Mischung abgestuft in eine weiche Mischung geändert werden. Dabei ist es sogar möglich, zwei oder mehr Komponenten des zweiten Materials auf die Basisfläche und/oder eine darauf befindliche verfestigte Materialschicht aufzutragen, um einen Formgegenstand herzustellen, der mehrere unterschiedliche Komponenten enthält. Diese Art der Multimaterialfähigkeit kann durch Hintereinanderschaltung von mehreren Druckmodulen für das zweite Material erreicht werden. So können unterschiedliche mechanische und/oder elektrische Eigenschaften und/oder unterschiedliche Farben erzielt werden.

Da bei dem erfindungsgemäßen Verfahren vorzugsweise nach dem Drucken jeder einzelnen Materialschicht jeweils über eine in einem vorbestimmten Abstand zur Basisfläche, vorzugsweise parallel zu dieser angeordnete Ebene überstehende Bereiche der verfestigten Negativform-Schicht und/oder der verfestigten Formgegenstands-Schicht durch Materialabtrag entfernt werden, verlaufen die einzelnen Schichten des Formgegenstands exakt parallel bzw. sind in einer vorbestimmten Anordnung zueinander angeordnet und weisen eine vorbestimmte Schichtdicke auf. Außerdem werden durch den Materialabtrag "Verschmutzungen", die beim Befüllen der Kavitäten mit dem zweiten Material an der Oberfläche der obersten verfestigten Schicht des ersten Materials auftreten können, wenn das zweite Material mit dieser Oberfläche in Berührung gerät, entfernt. Das Abtragen der über die Ebene überstehenden Bereiche sorgt also dafür, dass die aus dem verfestigten ersten und zweiten Material bestehende Mixschicht immer die gewünschte Dicke aufweist und an der Oberfläche des ersten Materials frei von dem zu entfernenden zweiten Material ist. Dies ermöglicht eine sehr genaue und verzerrungsarme Herstellung des Formgegenstands. Der Materialabtrag erfolgt bevorzugt spanabhebend, insbesondere mittels eines sogenannten Dickenfräsers, eines Schleifers und/oder eines Polierers.

Aus der Praxis ist zwar auch ein 3D-Druckverfahren bekannt, bei dem ein Formgegenstand durch schichtweisen Materialauftrag mittels eine Inkjet-Druckers aus einem niedrigviskosen Material hergestellt wird. Dabei werden die einzelnen Materialschichten jeweils nach dem Auftragen durch Bestrahlen mit UV-Strahlung verfestigt. Zusätzlich dazu wird nach dem Auftragen aller Materialschichten eine Wärmebehandlung des Formgegenstands durchgeführt, bei dem mechanische Spannungen in dem Formgegenstand abgebaut werden und das Material des Formgegenstands noch etwas weiter verfestigt wird. Dieses Verfahren ist aber nicht zum Drucken von Materialien geeignet, die einen durch Wärme aktivierbaren Härter enthalten, weil dieser durch die im Druckkopf des 3D-Druckers auftretende Verlustwärme aktiviert würde, mit der Folge, dass das Material bereits im Druckkopf härten und diesen verstopfen würde. Die mit dem vorbekannten Verfahren hergestellten Formgegenstände ermöglichen deshalb nur eine vergleichsweise geringe mechanische Festigkeit.

Bei dem erfindungsgemäßen Verfahren werden die über die in dem vorbestimmten Abstand zur Basisfläche vorzugsweise parallel zu dieser angeordnete Ebene überstehenden Bereiche der verfestigten Negativform-Schicht und der verfestigten Formgegenstands-Schicht nach jedem Auftragen einer Formgegenstands-Schicht durch Materialabtrag entfernt. Mit Hilfe des erfindungsgemäßen Verfahrens können daher Formgegenstände komplett in einem Drucker gefertigt werden - ohne, dass es einen anderen Prozesses bedarf.

Erfindungsgemäß wird die Hauptkomponente der einzelnen Formgegenstands-Schichten in Schritt d) jeweils durch die Behandlung mit Energie soweit teilweise bzw. schwach vernetzt, dass die Formgegenstandsschichten ihre Form beibehalten. Die Hauptkomponente des zweiten Materials kann mindestens ein Monomer, wenigstens ein Oligomer und/oder mindestens ein Polymer umfassen, die durch Behandlung mit Energie vernetzbar sind.

Unter einer Behandlung mit Energie wird eine geeignete elektromagnetische Strahlung, vorzugsweise ultraviolette Strahlung, Elektronenstrahlung und/oder lonenstrahlung verstanden. Wenn ultraviolette Strahlung verwendet wird, enthält das zweite Material bevorzugt einen Photoinitiator.

In dem anschließenden, durch Wärme ausgelösten chemischen Schritt h) wird eine langsame Relaxation und End-Vernetzung des zweiten Materials durchgeführt, bei dem die Hauptkomponente des durch Auftragen der einzelnen Formgegenstands-Schichten gebildeten Formgegenstands weiter verfestigt wird. Die Zusammensetzung von Hauptkomponente und Härter wird bevorzugt so eingestellt, dass erst ab einer vorbestimmten Temperatur die chemische Vernetzung ausgelöst wird. Diese Temperatur ist einstellbar durch Auswahl eines entsprechenden Härters. Unterhalb dieser Temperatur erfolgt die chemische Vernetzung entweder gar nicht oder nur sehr langsam. Dies erlaubt eine ausreichend lange Brauchbarkeit des Material-Gemischs ohne dass dieses bereits im Druckmodul vernetzt.

Die Wärmebehandlung findet bevorzugt bei Temperaturen von ca. 100 °C bis 200 °C, insbesondere bei Temperaturen von ca. 120 °C bis 180 °C. Die Wärmebehandlung dauert je nach Art der Hauptkomponente und der Härters 15 bis 90 Minuten, insbesondere 30 bis 75 Minuten. Danach liegt ein aus homogenem Material geformter Formgegenstand vor.

Da Schritt d) erst durchgeführt wird, nachdem sämtliche Schichten des Formgegenstands aufgetragen wurden, muss nur eine einzige Wärmebehandlung erfolgen. Das erfindungsgemäße Verfahren ermöglicht sowohl eine schnelle Formerhaltung des Formgegenstands als auch eine hohe mechanische und/oder chemische Belastbarkeit des Formgegenstands. Dies ist die Grundvoraussetzung für die industrielle Tauglichkeit des Formgegenstands.

Aus einem von der BERLAC AG, Allmendweg 39, 4450 Sissach, Schweiz im Internet veröffentlichten Informationsblatt mit dem Titel "BERLAC DUAL CURE UV-KLARLACK", ist ein zweistufiges Härtungsverfahren für einen Klarlack bekannt. Hierbei wird ein Einkomponenten-Lack, der als Oberflächenschutz im Einschichtverfahren auf ein fertig geformtes Objekt aufgetragen. Der Lack wird jedoch zuerst mit Wärme auf dem Objekt fixiert und erst danach mittels UV-Strahlung endvernetzt.

Bei einer bevorzugten Ausgestaltung der Erfindung werden die Materialportionen des ersten Materials vorzugsweise mittels eines Tintenstrahl-Druckverfahrens oder mittels Pulverauftragsverfahrens (Pulverpartikel-Transfer) auf die Basisfläche und/oder die darauf befindliche verfestigte Negativform-Schicht und/oder eine verfestigte Formgegenstands-Schicht aufgebracht, wobei das erste Material ein durch Einwirkung von Energie verfestigbares Material ist, das zum Verfestigen der Negativform-Schicht mit der Energie beaufschlagt wird. Da das zweite Material einen thermisch aktivierbaren Härter (Vernetzer) enthält, der bereits bei erhöhter Raumtemperatur eine leichte Vernetzungs-Reaktion auslösen kann, ist dieses nicht für die Düsen von hochauflösenden InkJet-Druckern geeignet. Die erhöhte Temperatur, die bereits durch die Abwärme des Druckkopfs eines InkJet-Druckers erreicht werden kann, führt zu einem langsamen, aber stetigen Viskositätsanstieg des zweiten Materials, wodurch in kurzer Zeit (Stunden) der InkJet-Drucker funktionsunfähig wird und gegebenenfalls der Druckkopf und/oder die Einrichtung zum Versorgen des Druckkopfs mit dem zweiten Material (Zuleitungen, Vorratsbehälter) geschädigt werden. Die Erfindung umgeht diesen gravierenden Nachteil, indem lediglich die Negativform aus dem niedrigviskosen ersten (Stütz-)Material schichtweise beispielsweise mittels des InkJet-Druckers gedruckt und durch Behandlung mit Energie vernetzt wird. Die mechanische Festigkeit des ersten Materials spielt dabei für die Festigkeit des Formgegenstands keine Rolle, weil das erste Material später entfernt wird. Das eigentliche hochviskose zweite Material für den Formgegenstand kann dagegen mit Hilfe von Verfahren schichtweise in die Kavitäten der Negativform abgelegt und vernetzt werden, die höherviskose Material-Mischungen verarbeiten können.

Bei einer vorteilhaften Ausführungsform des Verfahrens ist die Viskosität des zweiten Materials im unverfestigten Zustand höher, gegebenenfalls mindestens 10 mal so hoch, insbesondere mindestens 200 mal so hoch und bevorzugt mindestens 2000 mal so hoch wie die Viskosität des ersten Materials im unverfestigten Zustand und/oder dass das fließfähige erste und das fließfähige, pastöse oder pulverförmige zweite Material weisen einen Feststoffanteil auf, wobei der Feststoffanteil des zweiten Materials im unverfestigten Zustand dieses Materials höher, gegebenenfalls mindestens 10 mal so hoch, insbesondere mindestens 200 mal so hoch und bevorzugt mindestens 2000 mal so hoch ist wie der Feststoffanteil des ersten Materials in dessen unverfestigtem Zustand. Dies ermöglicht die Herstellung eines Formgegenstands, der eine hohe Oberflächenqualität und -genauigkeit und gleichzeitig eine ausgezeichnete mechanische Festigkeit aufweist. Des Weiteren kann das zweite Material mit Feststoffanteil (Additiven) in sphärischer, oder faserähnlicher Form bereitgestellt werden, welche die mechanischen und/oder elektrischen Eigenschaften gegenüber einem entsprechenden Material ohne Feststoffanteile deutlich steigern.

Bei einer zweckmäßigen Ausgestaltung der Erfindung hat erste Material eine zum Verjetten geeignete Arbeits-Viskosität, die geringer als 1000 mPa·s, insbesondere geringer als 100 mPa·s, gegebenenfalls geringer als 30 mPa·s und bevorzugt geringer als 10 mPa·s ist und wird in Form von Flüssigkeitströpfchen mit einer Auflösung von mindestens 360 dpi, insbesondere mindestens 720 dpi und bevorzugt mindestens 1440 dpi auf die Basisfläche und/oder die darauf befindliche verfestigte Materialschicht des dreidimensionalen Formgegenstands aufgebracht. Dies ermöglicht eine hohe Oberflächenqualität des Formgegenstands. Das zweite Material wird bevorzugt gegenüber der Raumtemperatur auf eine Arbeitstemperatur erwärmt, um seine Fließfähigkeit zu verändern, vorzugsweise um diese zu erhöhen bzw. die Viskosität zu verringern. Danach wird das auf Arbeitstemperatur erwärmte zweite Material auf die Basisfläche bzw. eine darauf befindliche verfestigte Materialschicht aufgetragen.

Vorteilhaft ist, wenn die Hauptkomponente des zweiten Materials mindestens ein Epoxid, wenigstens ein Oxetan, zumindest ein funktionales (Meth)acrylat, mindestens einen Vinylether oder eine Mischung aus mindestens zwei dieser Stoffe umfasst. Der mindestens eine Vinylether dient als Coreaktand zur Beschleunigung der S Das zweiten Material kann außerdem mindestens einen üblichen Photoinitiator und/oder wenigstens ein Additiv zur Verbesserung der Endeigenschaften (Festigkeit, mechanische Spannungsarmut, chemische Beständigkeit) enthalten.

Bei einer bevorzugten Ausführungsform der Erfindung enthält der latente Härter Dicyandiamid und/oder Säureanhydrid und/oder mindestens ein blockiertes Isocyanat und/oder wenigstens ein Carbodiimid. Durch Auswahl eines dieser Stoffe oder durch Kombination mehrerer dieser Stoffe kann die Temperatur eingestellt werden, die mindestens erforderlich ist, um die chemische Vernetzung auszulösen.

Die Konzentration des Härters beträgt bei einer vorteilhaften Ausgestaltung der Erfindung zwischen 0,2 und 5% Volumenprozent, insbesondere zwischen 1,2 und 4% Volumenprozent und bevorzugt zwischen 2,2 und 3% Volumenprozent des zweiten Materials. Zweckmäßigerweise wird die Konzentration des Härters auf die Funktionalität bzw. Festigkeit des Basismaterials nach der Strahlenhärtung abgestimmt.

Bei einer Weiterbildung der Erfindung wird das zweite Material mittels eines teilselektiven, digitalen Beschichtungs-/Dosierungsverfahrens derart in Abhängigkeit von den Geometriedaten auf die Negativform-Schicht aufgetragen, dass zumindest eine Materialportion des fließfähigen, pastösen oder pulverförmigen zweiten Materials in die mindestens eine Kavität vollfüllend abgegeben wird und vorzugsweise außerhalb der Kavität befindliche Stellen der Negativform-Schicht nicht oder nur geringfügig mit dem zweiten Material in Kontakt gebracht werden. Unter einem teilselektiven Beschichtungsverfahren wird ein Beschichtungsverfahren verstanden, bei dem das zweite Material in der Kavität vollflächig auf die Negativform-Schicht und außerhalb der Kavität nur auf einen Teilbereich der Oberfläche der Negativform-Schicht aufgetragen wird. Das Einfüllen des zweiten Materials in die Kavitäten kann mit Hilfe von Düsen erfolgen, die mittels eines Ventils oder dergleichen Stelleinrichtung in eine Offen- und eine Schließstellung verstellbar sind. Die Synchronisierung der Ventile in Abhängigkeit von der Relativposition zwischen den Kavitäten und den Abgabeöffnungen der Düsen kann mittels einer Steuerung erfolgen. Dies ist ein Vorteil im Vergleich zu den analogen Beschichtungsverfahren, bei denen das zweite Material großflächig, also nicht selektiv sowohl innerhalb als auch außerhalb der Kavitäten aufgetragen wird. Das zweite Material kann beim Einfüllen in die Kavitäten eine andere Eigenschaft aufweisen als das erste Material, insbesondere kann das zweie Material eine höhere Viskosität haben als die Viskosität, die des erste Material hat, wenn es auf die Basisfläche bzw. eine darauf befindliche, verfestigte Materialschicht des dreidimensionalen Formgegenstands aufgetragen wird.

Bei einer bevorzugten Ausgestaltung der Erfindung ist das zweite Material ein Komposit, welches ein Fluid und wenigstens ein Additiv umfasst, wobei das Fluid bei Raumtemperatur eine Viskosität von mindestens 50 mPa·s und vorzugsweise von mindestens 1000 mPa·s aufweist, und wobei das Additiv Feststoffpartikel aufweist, die in dem Fluid angeordnet sind. Die Feststoffpartikel können Fasern, insbesondere Carbonfasern, Nanotubes, Glaskugeln, Graphen, Styrolblockcopolymere, insbesondere Styrol-Ethylen-Butylen-Styrol (SEBS), Nano/Mikro-Partikel von Feststoffen als Füllstoffe und/oder hochverzweigte Polyesterole und/oder deren Abmischungen umfassen. Das Komposit kann bei Zimmertemperatur oder erwärmt bei einer höheren Temperatur als der Zimmertemperatur in die Kavität(en) eingefüllt werden.

Bei einer bevorzugten Ausgestaltung der Erfindung weist das zweite Material eine höhere Viskosität und/oder einen höheren Feststoffanteil auf als das erste Material, wobei sowohl das erste als auch das zweite Material mittels eines Tintenstrahldruckverfahrens auf die Basisfläche und/oder eine darauf befindliche verfestigte Negativform-Schicht und/oder Formgegenstands-Schicht aufgebracht werden, wobei bei dem Tintenstrahl-Druckverfahren das erste Material aus mindestens einer ersten Düse und das zweite Material aus wenigstens einer zweiten Düse ausgestoßen werden, und wobei die Austrittsöffnung der zweiten Düse vorzugsweise einen größeren Querschnitt aufweist und/oder mit einem höheren Arbeitsdruck beaufschlagt wird als die Austrittsöffnung der ersten Düse, wobei insbesondere der Durchmesser der Austrittsöffnung der zweiten Düse größer ist als derjenige der Austrittsöffnung der ersten Düse. Unter einem Tintenstrahldruckverfahren wird ein Druckverfahren verstanden, bei dem das zweite Material mittels eines Piezoelektris,chen Aktivators pulsartig und/oder portionsweise aus der Düse ausgestoßen wird (Jetten). Durch den größeren Querschnitt und/oder höheren Arbeitsdruck der zweiten Düse wird das Tintenstrahl-Drucken des hochviskosen zweiten Materials ermöglicht. Der im Vergleich zum Querschnitt der Austrittsöffnung der zweiten Düse kleinere Querschnitt der Austrittsöffnung der ersten Düse und/oder der im Vergleich zum Arbeitsdruck der ersten Düse höhere Arbeitsdruck der zweiten Düse ermöglicht es, das erste Material hochaufgelöst auf die Basisfläche bzw. eine darauf befindliche, verfestigte Materialschicht des dreidimensionalen Formgegenstands aufzutragen.

Die Düsen werden in kleiner Distanz zu der Oberfläche platziert, auf der das zweite Material aufgetragen werden soll. Wenn sich unter der Düse eine Kavität befindet, wird der Fluss des zweiten Materials aus dem Material-Kanal der Düse aktiviert. Das zweite Material wird aus der Düse gepresst und bei relativ zur Düse bewegter Oberfläche wird ein Streifen des zweiten Materials auf dieser abgelegt. Nach Deaktivieren des Materialnachschubes bewegt sich die Düse ohne Materialabgabe über die Oberfläche.

Bei einer Weiterbildung der Erfindung wird das zweite Material mit einem Druck, insbesondere einem Gasdruck beaufschlagt und das auf diese Weise unter Druck gesetzte zweite Material wird über wenigstens ein Ventil zu mindestens einer Düse geleitet, wobei die Austrittsöffnung der Düse entlang der Basisfläche relativ zu dem Trägerteil positioniert und das Ventil derart in Abhängigkeit von den für den herzustellenden Formgegenstand bereitgestellten Geometriedaten und in Abhängigkeit von der Relativposition zwischen der Düse und dem Trägerteil angesteuert wird, dass der Materialfluss freigegeben wird, wenn die Austrittsöffnung derart an der Kavität positioniert ist, dass das zweite Material von der Düse in die Kavität abgegeben werden kann, und dass der Materialfluss gesperrt wird, wenn die Austrittsöffnung derart positioniert ist, dass das zweite Material nicht von der Düse in die Kavität abgegeben werden kann. Dabei kann der Materialfluss an oder kurz vor der Kavität freigegeben und beim Verlassen der Kavität oder kurz danach gesperrt werden. Das Ventil kann elektromagnetisch oder mittels eines Piezoelements betätigt werden.

Bevorzugt wird die Austrittsöffnung einer Düse entlang einer kontinuierlichen, innerhalb der Kavität verlaufenden Linie relativ zum Trägerteil bewegt und das flüssige, fließfähige oder pastöse zweite Material wird kontinuierlich entlang dieser Linie von der Austrittsöffnung in die Kavität abgegeben. Dies ermöglicht einen kontinuierlichen Materialauftrag und somit einen schnellen Arbeitsfortschritt beim Befüllen der Kavität(en) mit dem zweiten Material. Das zweite Material kann mittels einer an sich bekannten, für einen kontinuierlichen Förderprozess geeigneten Mikropumpe oder durch Beaufschlagen des zweiten Materials mit einem Druck der Düse zugeführt werden. Das Hinausbefördern des zweiten Materials aus dem Düsen-Kanal erfolgt entweder direkt durch einen Piezo-Aktivator für hohe Viskositäten, durch einen Piezo-Aktivator für einen Düsen-Kanal-Schieber (schließt/öffnet den Düsen-Kanal) oder wird durch Druckluft oder einen Druckkolben in den Kanal gepresst. Die Druckluft kann dabei durch ein Magnetventil elektromagnetisch aktiviert werden.

Bei einer Weiterbildung der Erfindung wird das zweite Material mittels eines Flexodruck-, Tiefdruck-, Offsetdruck-, Siebdruck-, Mikrodosierungsverfahrens, mittels eines Rakels und/oder Kammerrakels und/oder Pulverauftragsverfahrens nicht selektiv oder teil-selektiv in die Kavität eingefüllt. Das zweite Material wird also mit einem analogen Beschichtungsverfahren nicht selektiv oder teilselektiv in die Kavität(en) eingefüllt. Bei nicht selektivem Beschichtungsverfahren entfällt eine geometrieorientierte Steuerung des Materialauftrags vollständig. Bei teilselektivem Beschichtungsverfahren kann die Steuerung sehr einfach realisiert werden da keine hohe Auflösungen notwendig sind. Dies vereinfacht die elektronische Steuerung sehr effizient und trägt zur einer Kostensenkung bei der Gestaltung des gesamten Verfahrens. 3D-Druckverfahren, bei denen ein hochviskoses Druckmaterial (auch Composit-Material, das vorher aus Material-Komponenten gemischt wird), mittels einer Düse aufgetragen wird, sind zwar an sich bekannt. Dabei wird der Formgegenstand jedoch direkt (digital und selektiv) entsprechend einer elektronischen Vorlage gedruckt, also ohne die Verwendung einer Negativform. Diese 3D-Druck-verfahren ermöglichen jedoch nur eine geringe Druckauflösung, weil der Düsendurchmesser der Düse aufgrund der hohen Viskosität des Druckmaterials relativ groß sein muss.

Bei einer Weiterbildung der Erfindung wird das in die Kavität eingefüllte zweite Material vor dem Teilvernetzen seiner Hauptkomponente derart mit Feststoffpartikeln, insbesondere mit Fasern, in Kontakt gebracht, dass die Feststoffpartikel ganz und/oder teilweise in das in der Kavität befindliche zweite Material eindringen. Hierdurch wird das zweite Material verstärkt. Da die Feststoffpartikel erst nach dem Befüllen der Kavität mit dem zweiten Material in Kontakt gebracht werden, kann das zweite Material auf einfache Weise mittels einer Düse in die Kavität eingefüllt werden, ohne dass die Gefahr besteht, dass die Feststoffpartikel die Düse verstopfen.

Vorteilhaft ist, wenn die Feststoffpartikel als Feststoffpartikel-Schicht auf die Mantelfläche einer Übertragungswalze aufgebracht werden, und dass die beschichtete Mantelfläche danach derart dicht an der Oberfläche des in die Kavität eingefüllten zweiten Materials positioniert wird, dass die Feststoffpartikel-Schicht mit dem zweiten Material in Kontakt gerät und die Mantelfläche der Übertragungswalze von dem zweiten Material beabstandet ist. Da das zweite Material nur mit den Feststoffpartikeln, nicht aber mit der Übertragungswalze in Kontakt gerät, wird vermieden, dass das zweite Material an der Übertragungswalze haften bleibt und diese verschmutzt. Die Feststoffpartikel einerseits und die Mantelfläche der Übertragungswalze andererseits können elektrisch aufgeladen werden, wobei die Polarität der elektrischen Ladungen der Feststoffpartikel zur Polarität der auf der Übertragungswalze befindlichen elektrischen Ladungen entgegengesetzt ist, damit die Feststoffpartikel an der Mantelfläche der Übertragungswalze haften bleiben bzw. von dieser angezogen werden. Das in die Kavität eingefüllte zweite Material kann mit Ladungen geladen sein, deren Polarität zur Polarität der Ladungen der Feststoffpartikel entgegengesetzt ist. Hierdurch können sich die Feststoffpartikel leichter von der Mantelfläche der Walze ablösen, wenn sie in die Nähe des zweiten Materials geraten oder mit diesem in Kontakt kommen. Die Fasern können auch mittels eines Transportbands zugeführt werden.

Zweckmäßigerweise werden die oberste verfestigte Negativform-Schicht und/oder die oberste verfestigte Formgegenstands-Schicht von dem bei dem Materialabtrag auftretenden Abtrag gereinigt. Somit ergibt sich eine ebene und saubere Oberfläche auf die mit großer Präzision eine weitere Materialschicht aufgetragen werden kann.

Bei einer bevorzugten Ausführungsform der Erfindung wird das die Basisfläche aufweisende Trägerteil während des Materialauftrags und gegebenenfalls während des Verfestigens der Materialien um eine Rotationsachse gedreht und vorzugsweise entlang der Rotationsachse verschoben. Hierdurch ist ein unterbrechungsfreies Drucken einer Vielzahl von übereinander angeordneter Materialschichten möglich. Dies ermöglicht einen schnellen Materialauftrag und trägt zu einer hohen Produktqualität bei.

Bei einer vorteilhaften Ausgestaltung der Erfindung wird ein Lösungsmittel bereitgestellt, in dem das verfestigte erste Material lösbar ist, und die Negativform-Schichten werden vor, während und/oder nach dem Durchführen der Wärmebehandlung derart mit dem Lösungsmittel in Kontakt gebracht, dass sich das verfestigte erste Material in dem Lösungsmittel löst. Das verfestigte zweite Material ist in dem Lösungsmittel unlösbar. Dadurch kann das erste Material auf einfache Weise von dem Formgegenstand entfernt werden.

Bei einer anderen vorteilhaften Ausgestaltung der Erfindung werden die Negativform-Schichten vor, während und/oder nach dem Durchführen der Wärmebehandlung durch eine Phasenumwandlung des verfestigten ersten Materials von dem Formgegenstand entfernt. Dabei kann das erste Material beispielsweise ein Wachs oder dergleichen Material sein, das durch Erhitzen geschmolzen und ggf. verdunstet wird.

Erwähnt werden soll noch, dass das zweite Material auch pulverförmig auf die Basisfläche und/oder eine darauf befindliche verfestigte Materialschicht des dreidimensionalen Formgegenstands aufgebracht werden kann. Das zweite Material kann dabei in einem Vorratsbehälter angeordnet sein, der bereichsweise durch die Mantelfläche einer Übertragungswalze begrenzt wird, welche um ihre Zylinderachse drehangetrieben wird. Die Übertragungswalze wird beispielsweise mittels einer Ladekorona derart elektrostatisch aufgeladen, dass in dem zweiten Material enthaltene Pulverpartikel auf die Mantelfläche der Übertragungswalze übertragen werden und dort eine elektrostatisch geladenen Pulverschicht mit einer vorbestimmten Dicke bilden. Die Aufladung der Pulverpartikel wird z.B. durch den sog. Triboelektrik-Effekt erreicht indem die Pulverpartikel durch Aneinanderreibung ein steuerbares elektrostatisches Potential aufbauen. Die Basisfläche bzw. die darauf befindliche verfestigte Materialschicht des dreidimensionalen Formgegenstands wird mit der zur Ladungsart (positiv bzw. negativ) der Pulverschicht entgegengesetzten geladenen Ladungsart (negativ bzw. positiv) elektrostatisch aufgeladen und derart dicht an der Mantelfläche der Übertragungswalze vorbeibewegt, dass die geladenen Pulverpartikel der Pulverschicht durch elektrostatisch induzierte Kräfte auf die Basisfläche bzw. die darauf befindliche verfestigte Materialschicht übertragen werden und sich in der Kavität bzw. in den Kavitäten der Negativform ablagern. Dort werden die Pulverpartikel mittels eines geeigneten Fixierers fixiert. Beim Fixieren werden die Pulverpartikel untereinander und mit der Basisfläche bzw. der darauf befindlichen verfestigten Materialschicht verbunden. In einem weiteren Bearbeitungsschritt werden über eine in einem vorbestimmten Abstand zur Basisfläche angeordnete Ebene überstehende Bereiche der verfestigten Negativform-Schicht und/oder der verfestigten Formgegenstands-Schicht durch Materialabtrag entfernt, was vorstehend bereits erläutert wurde.

Nachfolgend sind Ausführungsbeispiele der Erfindung anhand der Zeichnungen näher erläutert. Es zeigt:
- Fig. 1: eine bevorzugte Vorrichtung in polarer Ausführung, zum Herstellen eines dreidimensionalen Formgegenstands mittels schichtweisem Materialauftrag, wobei die Vorrichtung unterschiedliche Abgabeeinrichtungen zur Abgabe unterschiedlicher flüssiger und verfestigbarer Materialien hat,
- Fig. 2: eine Seitenansicht einer Vorrichtung zum Herstellen eines dreidimensionalen Formgegenstands, wobei die Vorrichtung eine erste Abgabeeinrichtung aufweist, die Düsen zum schichtweisen Auftragen eines flüssigen ersten Materials und eine als Flexo- oder Tiefruckvorrichtung ausgestaltete zweite Materialauftragungsstation zum Auftragen eines flüssigen zweiten Materials hat,
- Fig. 3A bis 3F: einen Querschnitt durch einen Formgegenstand während unterschiedlicher Verfahrensschritte seiner Herstellung,
- Fig. 4: eine Seitenansicht einer Materialabtrags-Einheit während des Abtragens einer Materialschicht,
- Fig. 5: einen Querschnitt durch ein erstes Ausführungsbeispiel eines Formgegenstands nach dem Auftragen sämtlicher Materialschichten,
- Fig. 6: eine schematische Darstellung der aus dem ersten und zweiten Material bestehenden, verfestigten Materialschichten des Formgegenstands, wobei die Schichten transparent dargestellt sind,
- Fig. 7: eine dreidimensionale Ansicht eines Schichtstapels, bestehend aus den Materialschichten des ersten und zweiten Materials,
- Fig. 8: eine dreidimensionale Ansicht des Formgegenstands nach dem Entfernen der Materialschichten des ersten Materials mit Hilfe eines Lösungsmittels,
- Fig. 9: einen Querschnitt durch ein zweites Ausführungsbeispiel eines Formgegenstands nach dem Auftragen sämtlicher Materialschichten,
- Fig. 10: einen Querschnitt durch das zweite Ausführungsbeispiel des Formgegenstands nach dem Entfernen der Materialschichten des ersten Materials,
- Fig. 11: eine Seitenansicht einer Vorrichtung ähnlich Fig. 2, wobei jedoch anstelle der Flexo-Druckvorrichtung eine Rotations-Siebdruckvorrichtung vorgesehen ist,
- Fig. 12: eine Seitenansicht einer Vorrichtung ähnlich Fig. 2, wobei jedoch anstelle der Flexo-Druckvorrichtung eine Kammerrakel-Beschichtungsvorrichtung vorgesehen ist,
- Fig. 13: eine Darstellung ähnlich Fig. 2, wobei jedoch die zweite Abgabeeinrichtung der Vorrichtung mehrere Druckerbaugruppen aufweist, mit denen Formgegenstandsschichten herstellbar sind, die jeweils aus mehreren unterschiedlichen Materialien bestehen,
- Fig. 14: eine zylindrische Beschichtungs-Walze,
- Fig. 15: eine konische Beschichtungs-Walze,
- Fig. 16: eine Seitenansicht einer Vorrichtung ähnlich Fig. 2, wobei jedoch anstelle der Flexo-Druckvorrichtung eine Tintenstrahldruckvorrichtung für höhere Viskositäten vorgesehen ist,
- Fig. 17: eine Seitenansicht einer Vorrichtung ähnlich Fig. 2, wobei jedoch anstelle der Flexo-Druckvorrichtung eine Mikrodosierungs-/Beschichtungsvorrichtung vorgesehen ist,
- Fig. 18: einen vergrößerten Ausschnitt von Fig. 17, der eine Düse beim Befüllen einer Kavität mit dem zweiten Material zeigt,
- Fig. 19: eine Mikrodosierungs-/Beschichtungsvorrichtung, die zusätzlich zu den in Fig. 17 abgebildeten Komponenten eine Einrichtung zum Auftragen von Feststoff-Partikeln hat,
- Fig. 20: einen vergrößerten Ausschnitt von Fig. 19, der die Einrichtung zum Auftragen der Feststoff-Partikel zeigt,
- Fig. 21: eine Seitenansicht einer Vorrichtung zum Herstellen eines dreidimensionalen Formgegenstands, wobei die Vorrichtung eine Einrichtung zum Auftragen von Feststoff-Partikeln hat,
- Fig. 22: eine Darstellung ähnlich Fig. 2, wobei jedoch die zweite Abgabeeinrichtung mehrere Reservoirs für unterschiedliche Material-Komponenten und einen Mischer zum Vermischen der Material-Komponenten aufweist,
- Fig. 23: eine schematische Darstellung eines Druckkopf-Moduls zum Auftragung des zweiten Materials,
- Fig. 24: eine Kavität, die mit dem zweiten Material befüllt wurde,
- Fig. 25: eine Mikrodosierungs-Einheit mit einer Düse, die eine kreisförmige Austrittsöffnung hat, und
- Fig. 26: eine Mikrodosierungs-Einheit mit einer Düse, die eine rechteckige Austrittsöffnung zur Beschichtungs-Flächenvergrößerung hat.

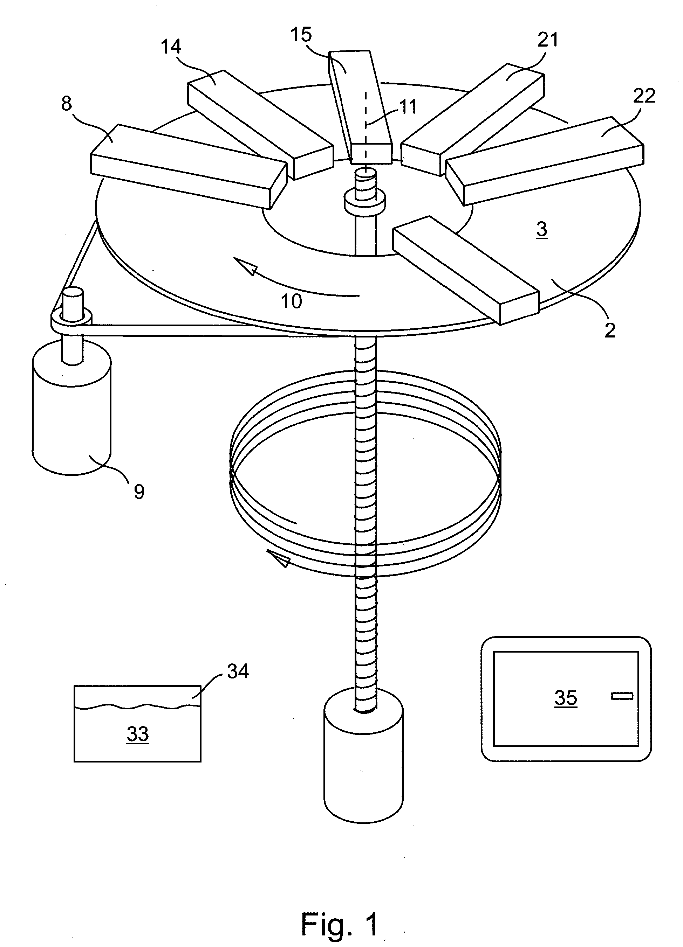

Bei einem Verfahren zum Herstellen einer dreidimensionalen Form und eines dreidimensionalen Formgegenstands 1 mittels schichtweisem Materialauftrag werden Geometriedaten für den Formgegenstand 1 von einer Steuereinheit bereitgestellt, die mit einem Computer kommuniziert, auf dem eine Software abläuft. Außerdem werden ein plattenförmiges Trägerteil 2 mit einer mit einer in einer Horizontalebene angeordneten Basisfläche 3 zur Aufnahme des Formgegenstands 1 bereitgestellt. Wie in Fig. 1 zu sehen ist, weist die Basisfläche 3 im Wesentlichen die Form einer Kreisringscheibe auf. Es sind aber auch andere Ausgestaltungen denkbar, bei denen die Basisfläche 3 insbesondere die Form einer Vollkreisscheibe aufweisen oder rechteckig ausgestaltet sein kann.

Ferner werden bei dem Verfahren ein verfestigbares flüssiges erstes Material 4, ein sich davon unterscheidendes, verfestigbares flüssiges zweites Material 5 und Wasser als Lösungsmittel für das verfestigte erste Material 4 bereitgestellt. Das verfestigte zweite Material 5 ist in dem Lösungsmittel nicht lösbar. Das erste Material 4 enthält ein Polymer und einen Photoinitiator, der bei Behandlung mit ultravioletter Strahlung eine Vernetzung des Polymers bewirkt.

Das zweite Material 5 hat eine höhere Viskosität als das erste Material 4 und enthält als Hauptkomponente ein Epoxid, das mit einem Photovernetzter vermischt ist. Der Photovernetzter bewirkt bei Behandlung mit ultravioletter Strahlung eine Vernetzung der Hauptkomponente. Zusätzlich zu dem Photovernetzer enthält das zweite Material 5 einen thermisch aktivierbaren, latenten Härter, der bei Erwärmung des zweiten Materials 5 auf eine Temperatur von mindestens 120° eine chemische Vernetzung der Hauptkomponente auslöst.

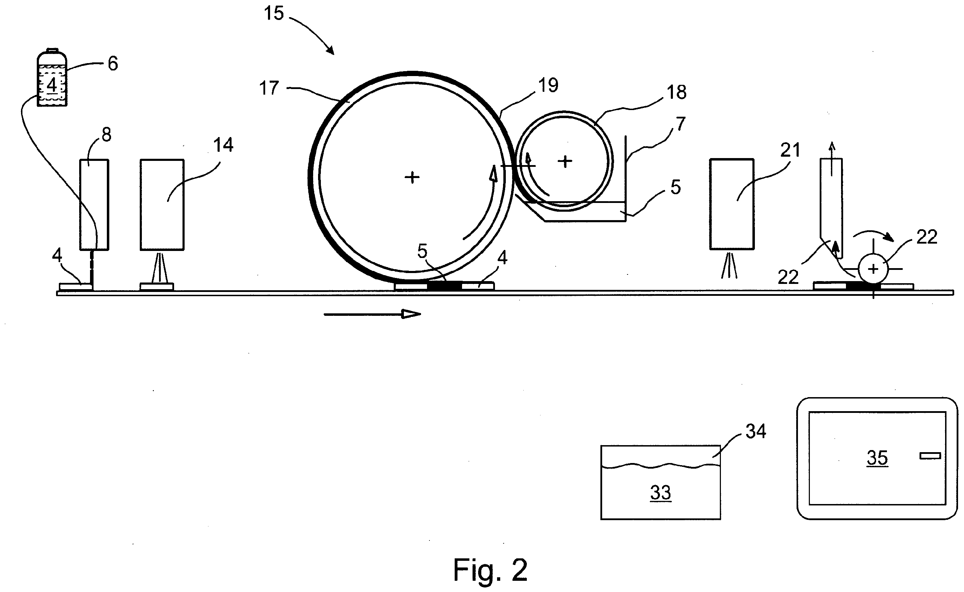

Das flüssige erste Material 4 ist in einem ersten Reservoir 6 und das flüssige zweite Material 5 in einem zweiten Reservoir 7 angeordnet. Es können vorzugsweise auch weitere Material-Reservoirs eingesetzt werden, die andere Materialien enthalten und die eine eventuelle Materialmischung nochmals erweitern. Das erste Reservoir 6 ist über eine Leitung mit einer ersten Abgabeeinrichtung 8 für das erste Material 4 verbunden. Wie in Fig. 2 erkennbar ist, ist das erste Reservoir 6 als im Wesentlichen geschlossener Behälter und das zweite Reservoir 7 als Wanne ausgebildet.

Die erste Abgabeeinrichtung 8 weist einen ersten Inkjet-Druckkopf mit einer Vielzahl von in einer Reihe angeordneten, in der Zeichnung nicht näher dargestellten Düsen auf, die zur Abgabe von Materialportionen des ersten Materials 4 auf die Basisfläche 3 bzw. eine darauf befindliche verfestigte Materialschicht des ersten und/oder zweiten Materials 4, 5 gerichtet sind. Die Düsenreihe ist parallel zur Ebene der Basisfläche 3 angeordnet und erstreckt sich quer zur Umfangsrichtung Basisfläche 3, vorzugsweise im Wesentlichen radial zu deren Zentrum.

Das Trägerteil 2 und die erste Abgabeeinrichtung 8 sind mit Hilfe einer ersten Positioniereinrichtung 9 in und entgegen der Richtung des Pfeils 10 relativ zueinander verdrehbar und parallel zur Rotationsachse 11 verschiebbar. Dabei bewegen sich Punkte, die in der Basisfläche 3 liegen und von der Rotationsachse 11 beabstandet sind, entlang einer wendel- oder schraubenlinienförmigen Bahnkurve.

Die erste Abgabeeinrichtung 8 und die erste Positioniereinrichtung 9 sind mit einer in der Zeichnung nicht näher dargestellten Steuereinrichtung verbunden, die einen Datenspeicher zum Ablegen der Geometriedaten des herzustellenden Formgegenstands 1 aufweist. Bei selektiver oder teil-selektiver Befüllung mit dem zweiten Material 5 werden die Geometriedaten ebenfalls für die Aktvierung bzw. Deaktivierung von Düsen oder dergleichen Abgabeelementen ausgewertet und verwendet.

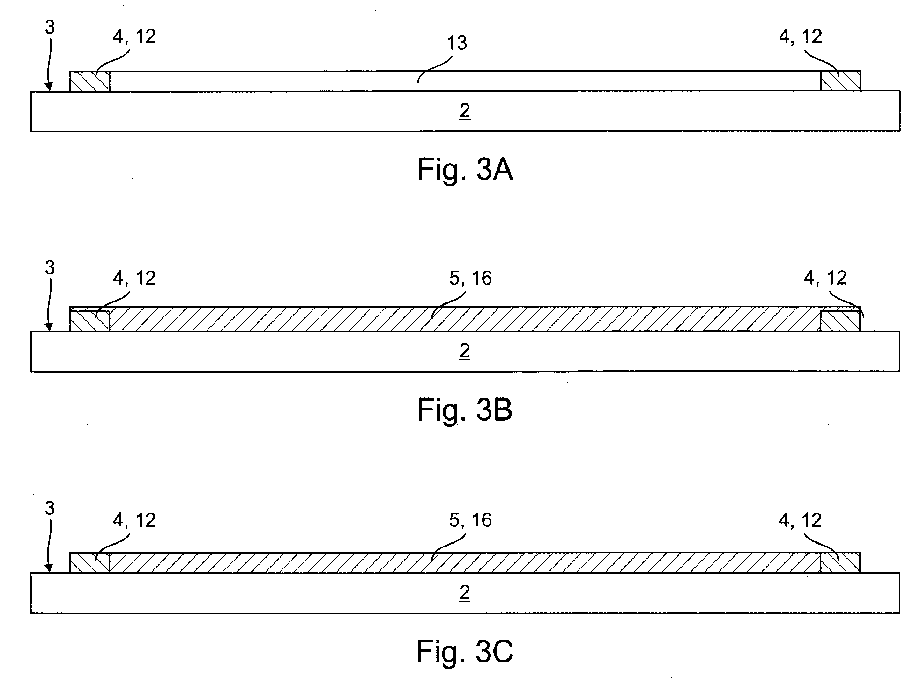

Mittels der Steuereinrichtung sind die Abgabe der Materialportionen des ersten Materials 4 und die erste Positioniereinrichtung 9 in Abhängigkeit von den Geometriedaten derart steuerbar, dass aus dem fließfähigen ersten Material 4 bestehende Negativform-Schichten 12 auf die Basisfläche 3 bzw. eine zuvor darauf aufgebrachte verfestigte Materialschicht des ersten und/oder zweiten Materials 4, 5 aufbringbar sind (Fig. 3A). Dabei haben die Negativform-Schichten 12 jeweils mindestens eine Kavität 13, welche eine Negativform einer herzustellenden Materialschicht des Formgegenstands 1 aufweist. Die Kavitäten 13 erstecken sich jeweils über die gesamte Schichtdicke der betreffenden Negativform-Schicht 12 bis zu der Basisfläche 3 bzw. der unter der Negativform-Schicht 12 befindlichen verfestigten Materialschicht.

In Richtung des Pfeils 10 hinter der ersten Abgabeeinrichtung 8 ist eine erste Verfestigungseinrichtung 14 angeordnet, mittels welcher das auf die Basisfläche 3 oder eine darauf befindliche verfestigte Materialschicht aufgetragene flüssige erste Material 4 verfestigbar ist. Die erste Verfestigungseinrichtung 14 hat zu diesem Zweck eine in der Zeichnung nicht näher dargestellte erste UV-Strahlungsquelle, mittels der ultraviolette Strahlung derart auf die zu verfestigende Materialschicht des ersten Materials abgebbar ist, dass ein in dem ersten Material enthaltener Photovernetzer aktiviert und die in dem ersten Material 4 enthaltenen Polymere vernetzt werden.

In Richtung des Pfeils 10 hinter der ersten Verfestigungseinrichtung 14 ist eine zweite Abgabeeinrichtung 15 angeordnet, mittels der die Kavität(en) 13 der jeweiligen, zuvor verfestigten Negativform-Schicht 12 mit dem zweiten Material 5 befüllt werden, um eine Formgegenstands-Schicht 16 zu bilden (Fig. 3B). Bei dem in Fig. 2 abgebildeten Ausführungsbeispiel ist die zweite Abgabeeinrichtung 15 als Flexo-Druckvorrichtung ausgestaltet.

Diese weist einen als Flexodruckwalze ausgestalteten Transferkörper 17 und eine mit dem zweiten Reservoir 7 in Kontakt stehende Beschichtungseinrichtung 18 auf, mittels der zumindest ein Oberflächenbereich des Transferkörpers 17 mit einer Schicht 19 des zweiten Materials 5 beschichtbar ist. Mit Hilfe einer zweiten Positioniereinrichtung ist der konisch ausgebildete Transferkörper 17 um eine gedachte Rotationsachse derart drehbar, dass die auf der Mantelfläche des Transferkörpers 17 befindliche Schicht 19 des zweiten Materials 5 derart mit dem Boden und der Innenwandung der Kavität(en) 13 in Kontakt gelangt, dass das fließfähige zweite Material 5 in die Kavität(en) eingefüllt wird und dann die Formgegenstands-Schicht 16 bildet. Diese weist die zu der Negativform der Schicht 12 inverse Positivform einer Schicht des herzustellenden Formgegenstands 1 auf.

Danach wird die so erhaltene Formgegenstands-Schicht 16 mit Hilfe einer zweiten Verfestigungseinrichtung 21 verfestigt. Wie in Fig. 1 zu sehen ist, ist die zweite Verfestigungseinrichtung 21 in Richtung des Pfeils 10 hinter der zweiten Abgabeeinrichtung 14 angeordnet. Die zweite Verfestigungseinrichtung 21 enthält eine zweite UV-Strahlungsquelle, mittels der ultraviolette Strahlung auf die Formgegenstands-Schicht 15 abgebbar ist, um das zweite Material durch Vernetzen darin enthaltener Polymere soweit zu verfestigen, dass der aus den Formgegenstands-Schichten 15 herzustellende Formgegenstand 1 seine Form beibehält.

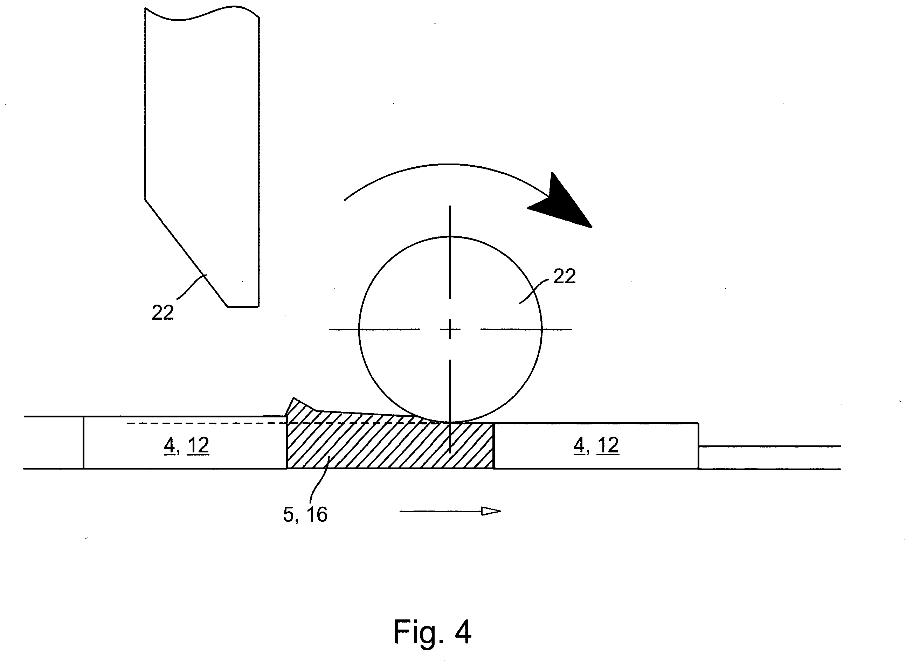

Danach werden in einem weiteren Verfahrensschritt Bereiche der verfestigten Negativform-Schicht 12 und/oder der verfestigten Formgegenstands-Schicht 16 und/oder verfestigtes zweites Material 5, das an der Negativform-Schicht angeordnet ist, mittels eines Dickenfräsers 22 entfernt (Fig. 3C, 4). Dabei werden Bereiche des verfestigten ersten und/oder zweiten Materials 4, 5, die über eine in einem vorbestimmten Abstand zur Basisfläche 3 parallel zu dieser angeordnete Ebene überstehen, durch Materialabtrag entfernt und anschließend mittels eines Saugdüse 23 abgesaugt. Bei Bedarf kann hinter der Saugdüse 23 eine Oberflächenreinigungseinrichtung 20 angeordnet sein.

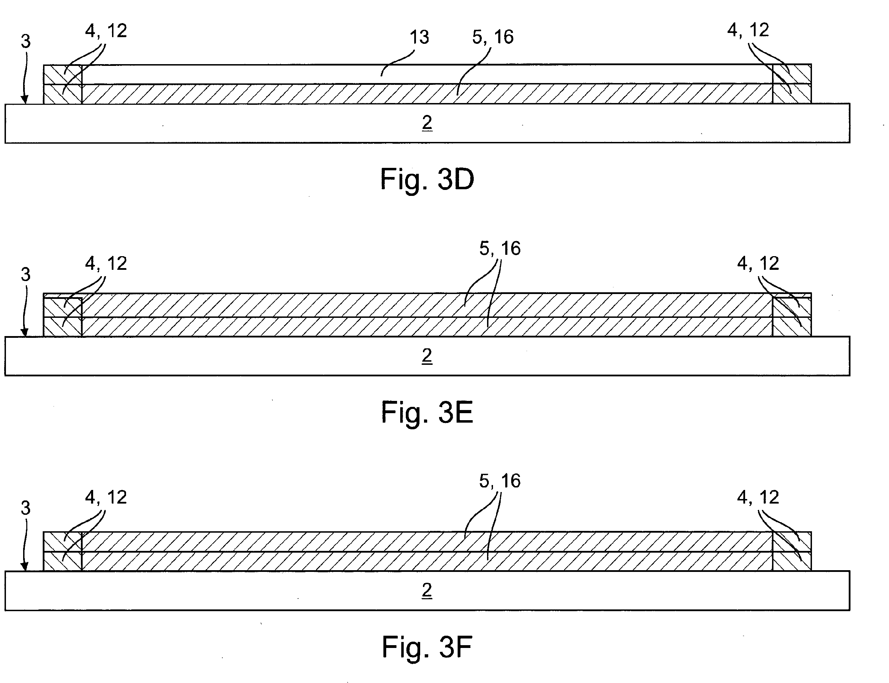

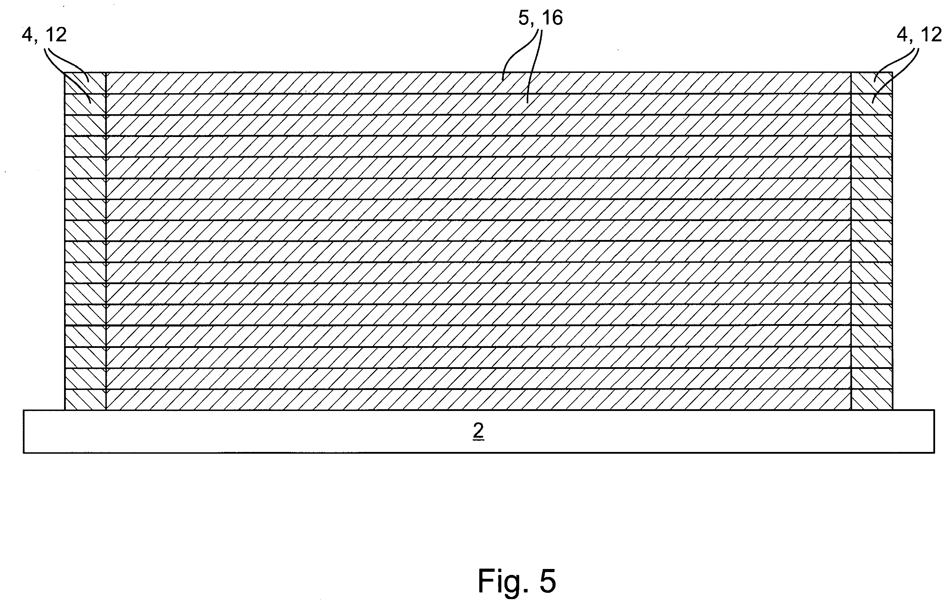

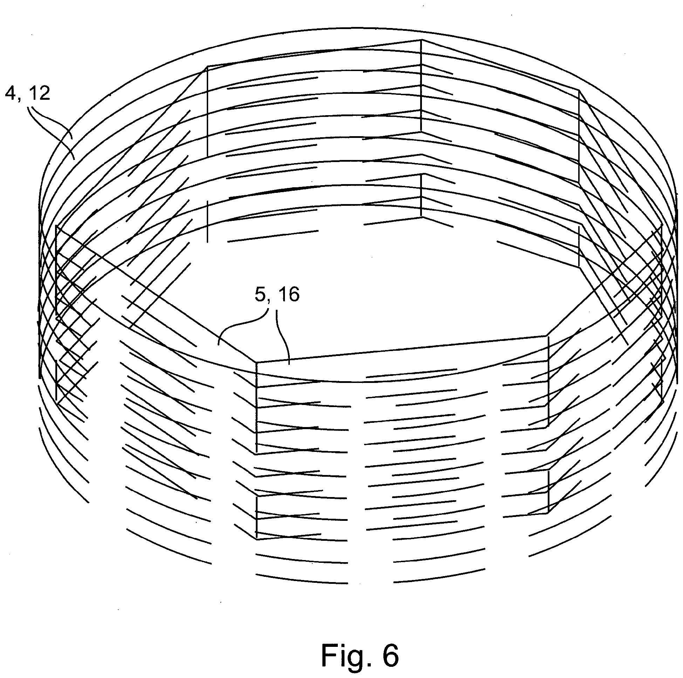

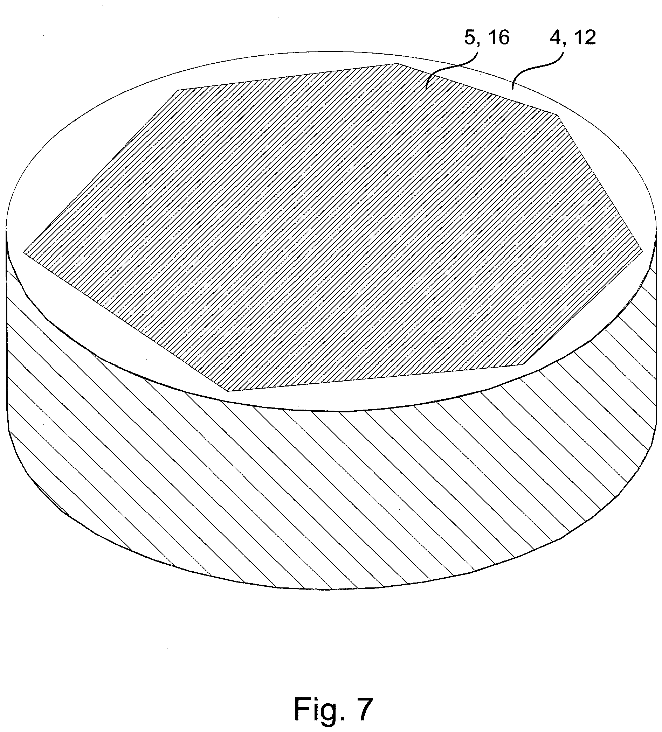

Nun werden in entsprechender Weise auf die Oberfläche der verfestigten Negativform-Schicht 12 und der Formgegenstands-Schicht 16 eine weitere Negativform-Schicht 12 (Fig. 3D) und eine weitere Formgegenstands-Schicht 16 aufgebracht (Fig. 3E, 3F) aufgebracht. Diese Schritte werden solange wiederholt, bis sämtliche Formgegenstands-Schichten 16 des herzustellenden Formgegenstands erzeugt sind (Fig. 5 bis 8).

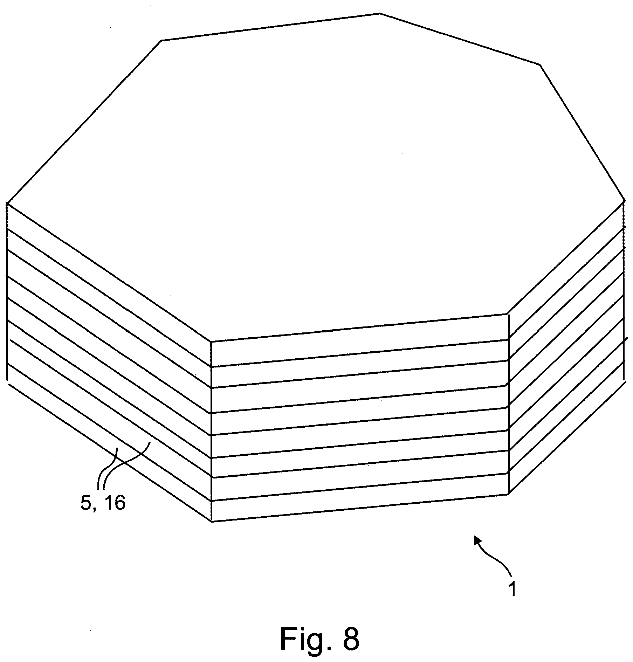

In einem weiteren Verfahrensschritt werden die Negativform-Schichten 12 derart mit dem Lösungsmittel 33 in Kontakt gebracht, dass sich das verfestigte erste Material 4 vollständig in dem Lösungsmittel 33 auflöst. Dies kann beispielsweise dadurch erreicht werden, dass der aus den Negativform-Schichten 12 und den Formgegenstands-Schichten 16 bestehende Schichtstapel für eine vorbestimmte Zeitdauer in das in einem Behälter 34 befindliche Lösungsmittel 33 eingetaucht wird. Danach wir der fertige Formgegenstand (Fig. 8) aus dem Lösungsmittel 33 entnommen und getrocknet.

Nach dem Entfernen der Negativ-Form wird eine Wärmebehandlung durchgeführt, bei welcher der aus den übereinander geschichteten Formgegenstands-Schichten 16 bestehende Formgegenstand 1 auf eine dem zweiten Material 5 angepasste Temperatur stufenweise erhitzt wird, bei welcher der in dem zweiten Material 5 enthaltene Härter die chemische Vernetzung der Hauptkomponente des zweiten Materials 5 auslöst. Für die Durchführung der Wärmebehandlung wird der Formgegenstand 1 zweckmäßigerweise in einen Ofen 35 verbracht und dort für eine vorbestimmte Zeitdauer, die 15 bis 90 Minuten betragen kann, auf einer vorbestimmten Temperatur von z.B. 130 °C gehalten. Die Zeiten und Temperaturen können je nach eingesetzter Materialmischung variieren.

Dabei wird die Hauptkomponente endvernetzt und unter Relaxation verfestigt, dass das zweite Material 5 eine höhere Festigkeit aufweist als sie das verfestigte erste Material 4 hatte, bevor es mit dem Lösungsmittel 33 in Kontakt gebracht wurde. Die End-Vernetzung findet langsam statt, wodurch mechanische Spannungen in der Hauptkomponente vermieden bzw. abgebaut werden.

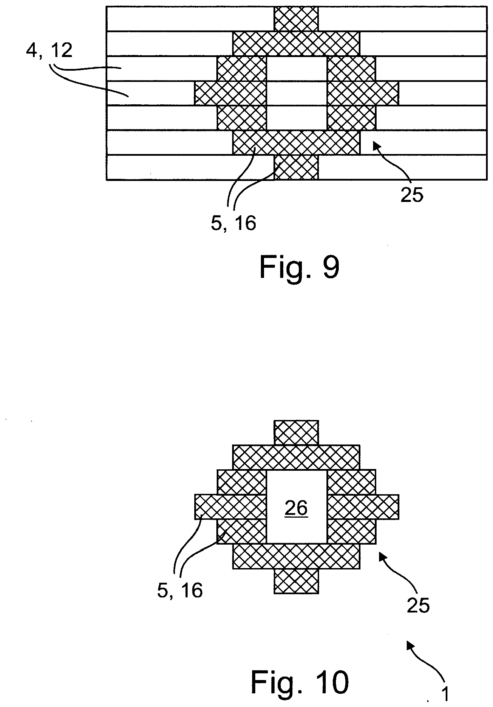

Wie in Fig. 9 und 10 zu sehen ist, lassen sich mit dem erfindungsgemäßen Verfahren auch Formgegenstände mit Überhängen 25 und Hohlräumen 26 herstellen.

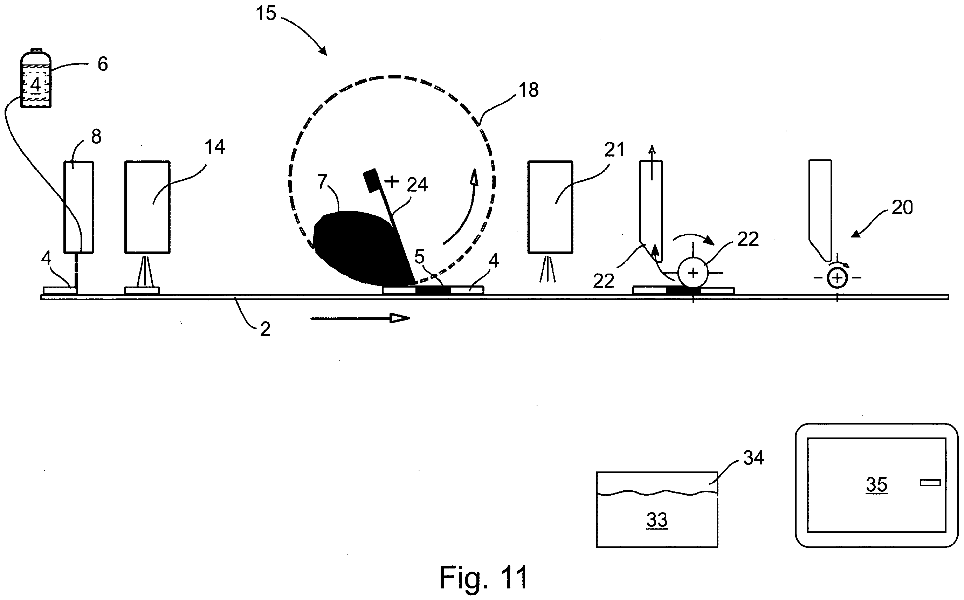

Das zweite Material 5 kann auch im Siebdruckverfahren in die Kavität(en) 13 eingefüllt werden. Wie in Fig. 11 zu sehen ist, ist der Transferkörper 18 dabei als Rotations-Siebdruckwalze ausgestaltet. Diese weist eine perforierte, siebartige Man-. telfläche auf. Das zweite Reservoir 6 ist in der Innenhöhlung der Rotations-Siebdruckwalze angeordnet.

Die in der Mantelfläche vorgesehenen Perforationslöcher sind bezüglich ihrer Abmessungen derart auf die Viskosität des zweiten Materials 5 abgestimmt, dass das zweite Material 5 mittels eines an der Innenmantelfläche der Zylinderwand der Rotations-Siebdruckwalze linienförmig anliegenden Rakels 24 durch die Perforationslöcher hindurchdrückbar ist. Außerhalb des Wirkungsbereichs des Rakels 24 tritt das zweite Material 5 nicht durch die Perforationslöcher hindurch. Eine hinter der Abgabestelle platzierte Reinigungs-Vorrichtung entfernt das nicht an der Rotations-Siebdruckwalze abgenommene Material und führt es zur Wiederverwendung in den Kreislauf. Im Übrigen entspricht die in Fig. 11 abgebildete Vorrichtung derjenigen in Fig. 2, so dass die Beschreibung von Fig. 2 für Fig. 11 entsprechend gilt.

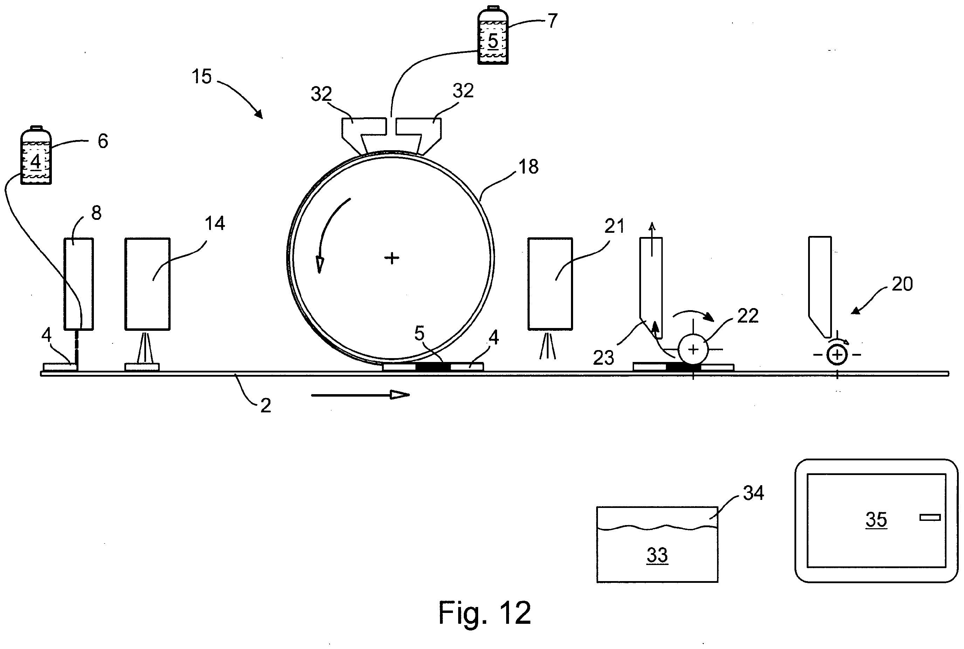

Das zweite Material 5 kann auch im Kammerrakel-Verfahren in die Kavität(en) 13 eingefüllt werden. Wie in Fig. 12 zu sehen ist, ist der Transferkörper 18 dabei als Rasterwalze ausgestaltet, an deren Außenmantelfläche ein Kammerrakel 32 angeordnet ist. Die Rasterwalze weist eine entsprechend gravierte und zur Materialaufnahme präparierte Mantelfläche auf. Im Übrigen entspricht die in Fig. 12 abgebildete Vorrichtung derjenigen in Fig. 2, so dass die Beschreibung von Fig. 2 für Fig. 12 entsprechend gilt.

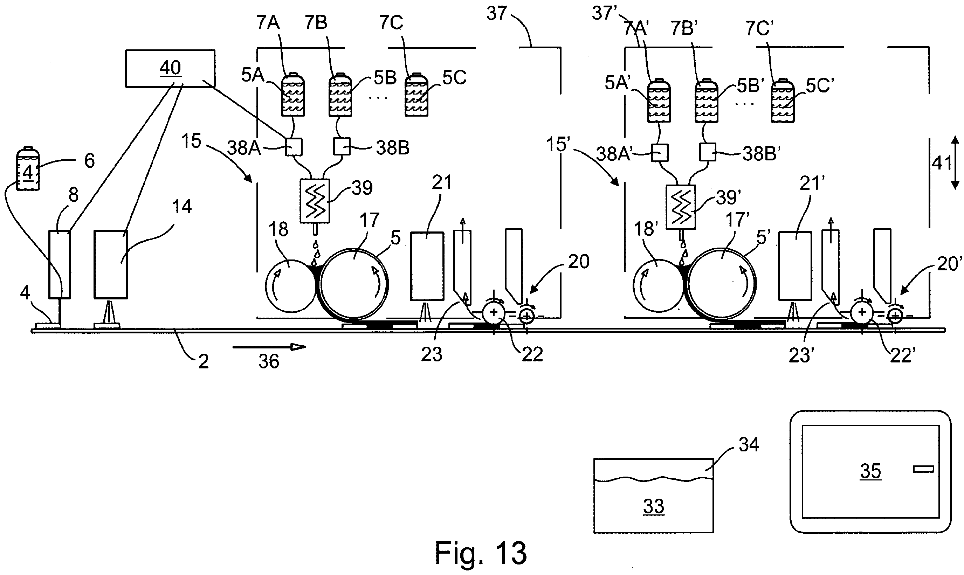

Bei dem in Fig. 13 abgebildeten Ausführungsbeispiel entspricht die aus dem ersten Reservoir 6, der ersten Abgabeeinrichtung 8 und der ersten Verfestigungseinrichtung 14 bestehende Anordnung derjenigen in Fig. 2, d.h. das erste Material 4 wird mit einem Inkjet-Druckkopf aufgetragen. Der ersten Abgabeeinrichtung 8 sind mehrere Druckerbaugruppen 37, 37' zugeordnet, die in Transportrichtung 36 des Trägerteil 2 vor der ersten Abgabeeinrichtung 8 angeordnet sind, d.h. die einzelnen, zu beschichtenden Bereiche der Basisfläche 3 bzw. der darauf befindlichen verfestigte Materialschicht werden jeweils zuerst an der ersten Abgabeeinrichtung 8 und erst danach an den Druckerbaugruppen 37, 37' vorbeibewegt. Jede Druckerbaugruppe 37, 37' hat jeweils einen zweite Abgabeeinrichtung 15, 15', die einen als Flexodruckwalze ausgestalteten Transferkörper 17, 17' und eine Beschichtungseinrichtung 18, 18' dafür umfasst. Der Aufbau der zweiten Abgabeeinrichtungen 15, 15' entspricht insoweit derjenigen aus Fig. 2.

Jeder zweiten Abgabeeinrichtungen 15 bzw. 15' sind jeweils mehrere zweite Reservoirs 7A, 7B, 7C bzw. 7A',7B', 7C' zugeordnet, in denen unterschiedliche Material-Komponenten 4A, 4B, 4C bzw. 4A', 4B', 4C' bevorratet sind, aus denen das betreffende zweite Material 5, 5' durch Vermischen herstellbar ist. Die zweiten Reservoirs 7A, 7B, 7C bzw. 7A', 7B', 7C' jeder zweiten Abgabeeinrichtung 15 bzw. 15' sind jeweils über einen ihnen zugordneten Dosierer 38A, 38B, 38A', 38 B' mit Einlassöffnungen eines Mischers 39, 39' verbunden. Die Auslassöffnung des Mischers 39, 39' ist mit der ihr zugeordneten zweiten Abgabeeinrichtungen 15, 15' verbunden. Steuereingänge der Dosierer 38A, 38B, 38A', 38 B' sind über Steuerleitungen mit einer Steuerung 40 verbunden. Mit Hilfe der Steuerung 40 kann die Dosierung der einzelnen Material-Komponenten 4A, 4B, 4C bzw. 4A', 4B', 4C' während des Herstellungsprozesses des Formgegenstands in Abhängigkeit von in dem Datenspeicher abgelegten, ortsabhängigen Materialdaten programmgesteuert verändert werden, um das Mischungsverhältnis der Material-Komponenten 4A, 4B, 4C bzw. 4A', 4B', 4C' entsprechend den jeweils gewünschten Materialeigenschaften des zweiten Materials 5, 5' einzustellen. Dadurch ist es insbesondere möglich, die Festigkeit der aus dem zweiten Material 5 hergestellten Materialschichten stufenförmig von Materialschicht zu Materialschicht über mehrere Materialschichten hinweg von einem ersten Festigkeitswert auf einen zweiten Festigkeitswert zu erhöhen (oder zu reduzieren), um größere Festigkeitssprünge in dem Material des Formgegenstands zu vermeiden.

Wie in Fig. 13 zu sehen ist, weist jede Druckerbaugruppe 37, 37 außerdem eine ihr zugeordnete zweite Verfestigungseinrichtung 21, 21', einen Dickenfräser 22, 22' und eine Oberflächenreinigungseinrichtung 20, 20' auf. Bezüglich dieser Komponenten gilt die Beschreibung von Fig.11 für die Fig. 13 entsprechend.

Erwähnt werden soll noch, dass die Druckerbaugruppen 37, 37' in Richtung des Doppelpfeils 41 quer zur Basisfläche 3 relativ zu dieser positionierbar sind.

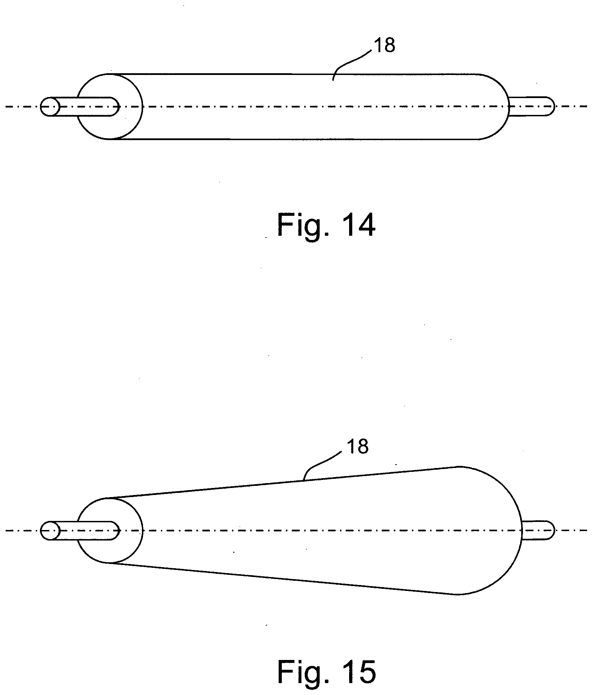

Während beim kartesischem Verfahren die Walze der Beschichtungseinrichtung 18 eine zylindrische Form hat (Fig. 14) weist die Walze beim polaren Verfahren eine konische Form auf (Fig. 15).

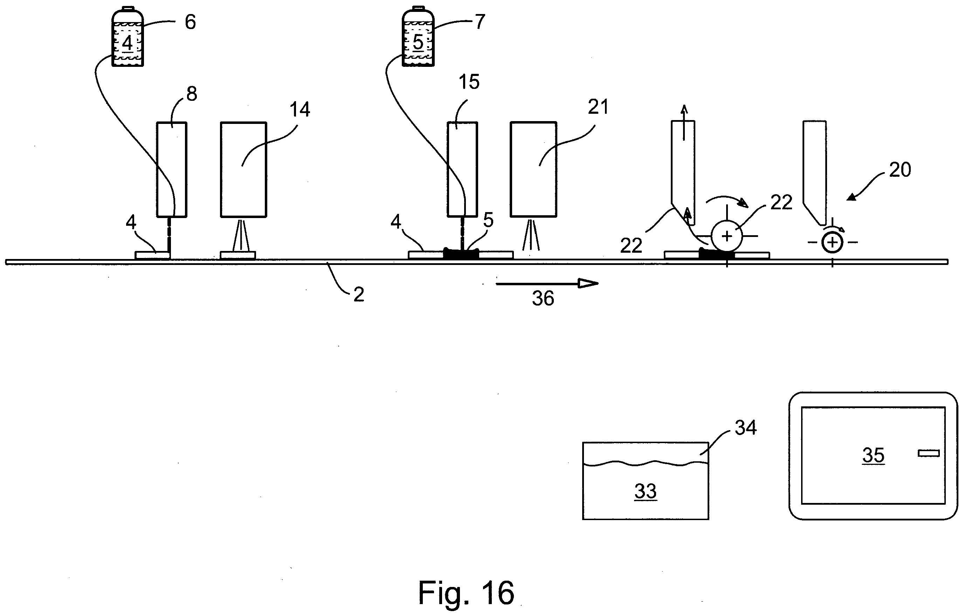

Das zweite Material 5 kann auch im Tintenstrahldruckverfahren in die Kavität(en) 13 eingefüllt werden (Fig. 16). Die zweite Abgabeeinrichtung 15 weist zu diesem Zweck einen zweiten Inkjet-Druckkopf mit einer Vielzahl von in einer Reihe angeordneten Düsen auf, die zur Abgabe von Materialportionen des zweiten Materials 5 auf die Basisfläche 3 bzw. eine darauf befindliche verfestigte Materialschicht des ersten und/oder zweiten Materials 4, 5 gerichtet sind. Die Düsenreihe ist parallel zur Ebene der Basisfläche 4 angeordnet und erstreckt sich quer zur Umfangsrichtung Basisfläche 3, vorzugsweise im Wesentlichen radial zu deren Zentrum. Da das zweite Material 5 eine höhere Viskosität aufweist als das erste Material 4, haben die Düsen des zweiten Inkjet-Druckkopfs einen größeren Querschnitt auf als die des ersten Inkjet-Druckkopfs. Statt mit einem größeren Düsenquerschnitt oder zusätzlich dazu kann bei den Düsen des zweiten Inkjet-Druckkopfs auch mit einem höheren Düsendruck gearbeitet werden als bei den ersten Düsen. Die Positionierung des Trägerteils 2 relativ zu dem Inkjet-Druckkopf erfolgt entsprechend Fig. 1 mit Hilfe einer Positioniereinrichtung. Das Ausstoßen des zweiten Materials 5 wird in Abhängigkeit von der Relativposition zwischen dem Inkjet-Druckkopf und dem Trägerteil 2 und in Abhängigkeit von den für den herzustellenden Formgegenstand 1 bereitgestellten Geometriedaten gesteuert.

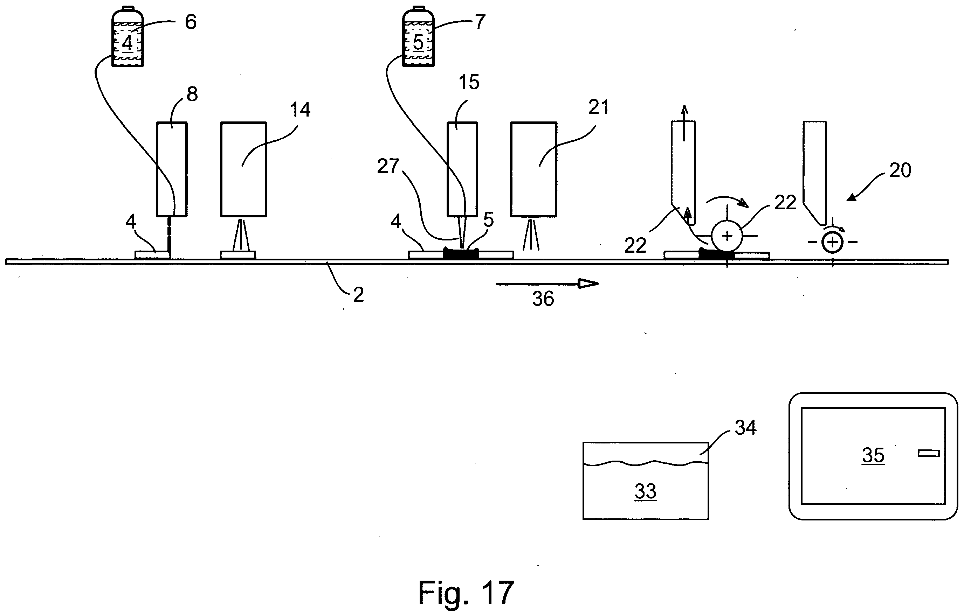

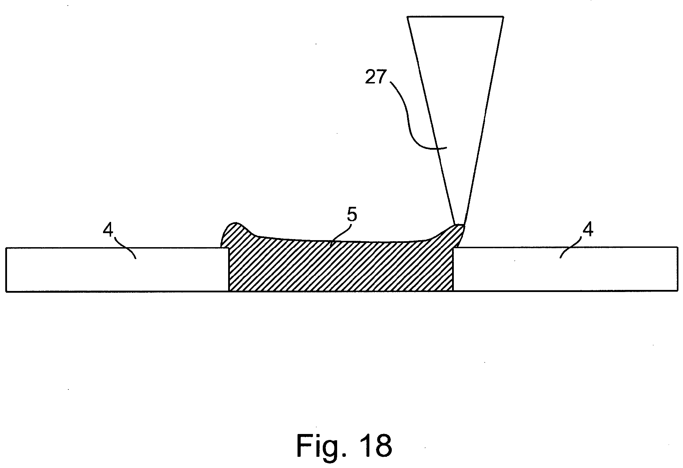

Bei dem in Fig. 17 gezeigten Ausführungsbeispiel wird das zweite Material 5 im Düsen-Verfahren in die Kavität(en) 13 eingefüllt. Bei dem Düsen-Verfahren wird ein hochviskoses zweites Material 5 bei Raumtemperatur mittels Gasdruck durch einen Düsen-Austritt befördert. Die Positionierung des Trägerteils 2 relativ zur Düse 27 (Fig. 18) erfolgt entsprechend Fig. 1 mit Hilfe einer Positioniereinrichtung 9. Das Ausstoßen des zweiten Materials 5 aus der Düse 27 wird in Abhängigkeit von der Relativposition zwischen der Düse 27 und dem Trägerteil 2 und in Abhängigkeit von den für den herzustellenden Formgegenstand 1 bereitgestellten Geometriedaten gesteuert. Nachdem das zweite Material in die Kavität(en) 13 eingefüllt wurde, wird es durch Abkühlen verfestigt.

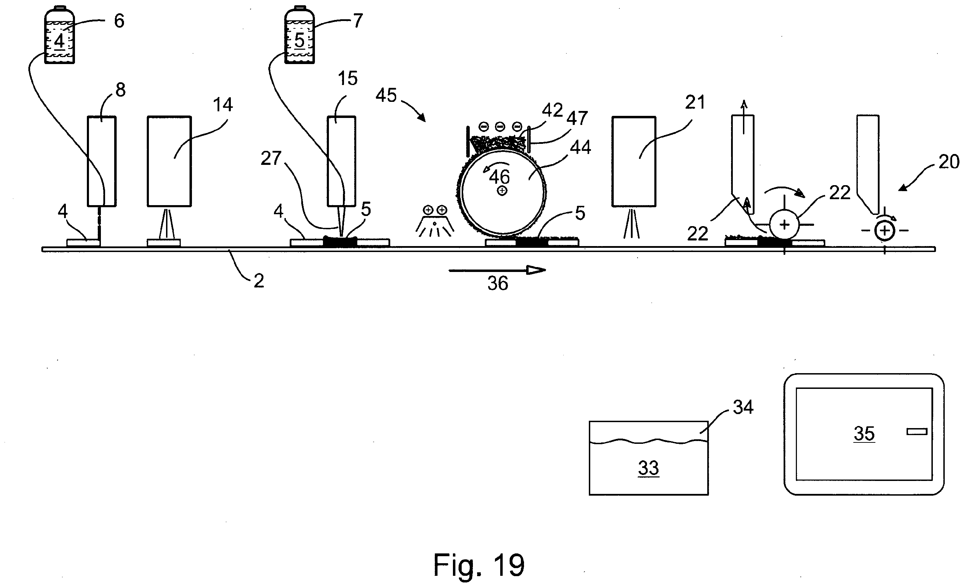

Bei dem in Fig. 19 gezeigten Ausführungsbeispiel wird das in die Kavität 13 eingefüllte zweite Material 5 vor dem Teilvernetzen seiner Hauptkomponente derart mit faserförmigen Feststoffpartikeln 42 in Kontakt gebracht, dass diese in das in der Kavität 13 befindliche zweite Material 5 eindringen. Die Vorrichtung hat zu diesem Zweck eine zwischen der zweiten Abgabeeinrichtung 15 und der zweiten Verfestigungseinrichtung 21 angeordnete Einrichtung 45 zum Auftragen der Feststoff-Partikel 42. Die Feststoffpartikel 42 sind in einem Vorratsbehälter 43 angeordnet, der unterseitig durch die Mantelfläche einer Übertragungswalze 44 begrenzt wird. Die Übertragungswalze 44 ist um eine parallel zur Basisfläche 3 des Trägerteils 2 und rechtwinklig zu dessen Transportrichtung 36 angeordnete Rotationsachse in Richtung des Pfeils 46 drehangetrieben. Zwischen den Seitenwänden 47 des Vorratsbehälters 43 und der der Mantelfläche der Übertragungswalze 44 ist ein Spalt angeordnet, durch den die Feststoffpartikel 42 hindurch passen. Beim Vorbeibewegen der Mantelfläche der Übertragungswalze 44 an den in dem Vorratsbehälter 43 befindlichen Feststoffpartikeln 42 werden diese als Feststoffpartikel-Schicht 48 auf die Mantelfläche der Übertragungswalze 44 aufgebracht.

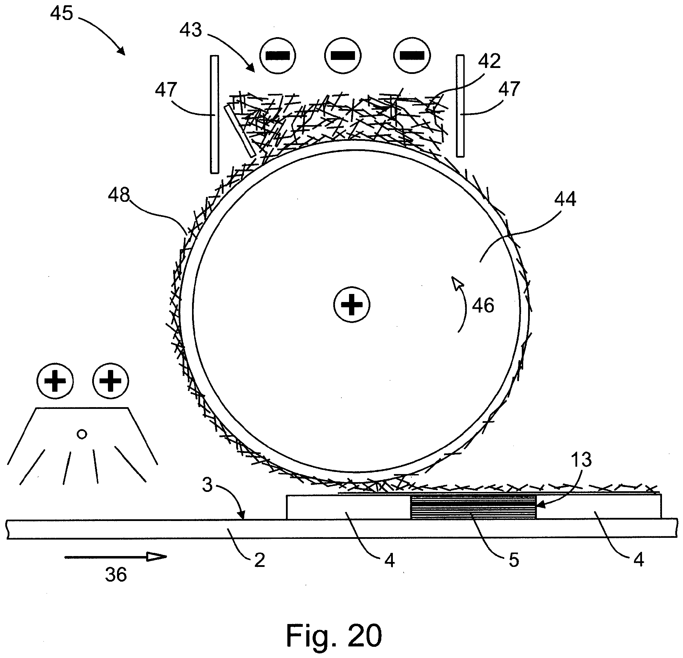

Wie in Fig. 20 zu sehen ist, wird die Übertragungswalze 44 mit ihrer Mantelfläche derart dicht an der Oberfläche des in die Kavität 13 eingefüllten, fließfähigen zweiten Materials 5 positioniert, dass die Feststoffpartikel-Schicht 48 mit dem zweiten Material 5 in Kontakt gerät, nicht aber die Übertragungswalze 44. Die Übertragungswalze 44 besteht zumindest an ihrer Mantelfläche aus einem elektrisch leitfähigen Material, an die ein positives Potential angelegt wird. Die Feststoffpartikel 42 werden negativ aufgeladen. Zusätzlich wird die Basisfläche bzw. die Oberfläche der Übertragungswalze 44 zugewandte Oberfläche des zweiten Materials elektrostatisch positiv aufgeladen, so dass sie die Feststoffpartikel 42 anziehen, wenn diese in das elektrische Feld der elektrostatischen Ladungen gelangen.

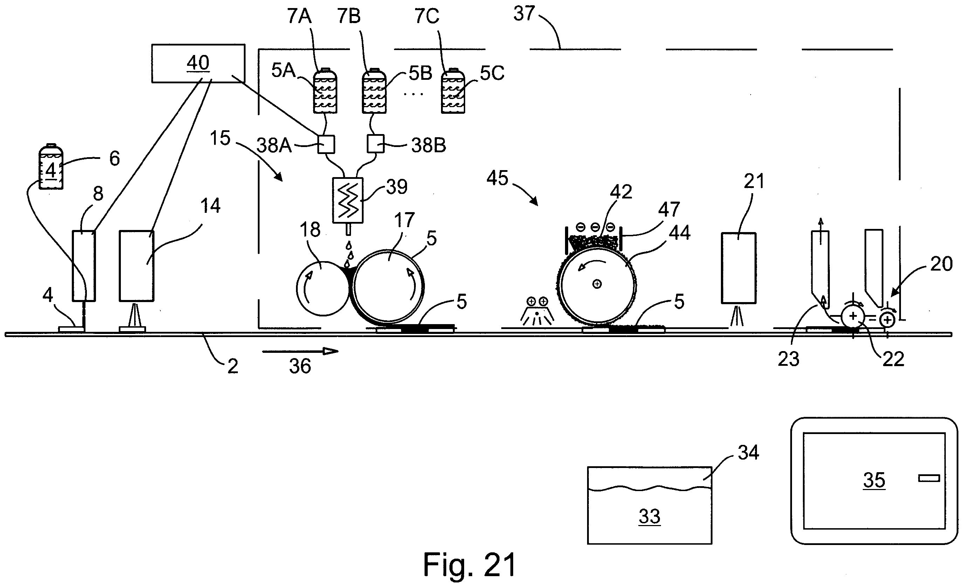

Das in Fig. 21 gezeigte Ausführungsbeispiel unterscheidet sich von dem in Fig. 19 gezeigten Ausführungsbeispiel dadurch, dass anstelle der die Düse 27 aufweisenden zweiten Abgabeeinrichtung 15 eine Abgabeeinrichtung 15 mit einem als Flexodruckwalze ausgestalteten Transferkörper 17 vorgesehen. Der Aufbau dieser Abgabeeinrichtung 15 entspricht demjenigen der zweiten Abgabeeinrichtungen 15 aus Fig. 13, d.h. das zweite Material 5 wird während des Druckprozesses aus mehreren Material-Komponenten 4A, 4B, 4C zusammengemischt. Das in Fig. 21 abgebildete Ausführungsbeispiel weist nur eine Druckerbaugruppe 37 auf. Es sind aber auch andere Ausgestaltungen denkbar, bei der mehrere, jeweils eine Einrichtung 45 zum Auftragen von Feststoff-Partikeln 42 aufweisende Druckerbaugruppen 37 hintereinander angeordnet sein können. Entsprechendes gilt für die in Fig. 19 abgebildete Vorrichtung.

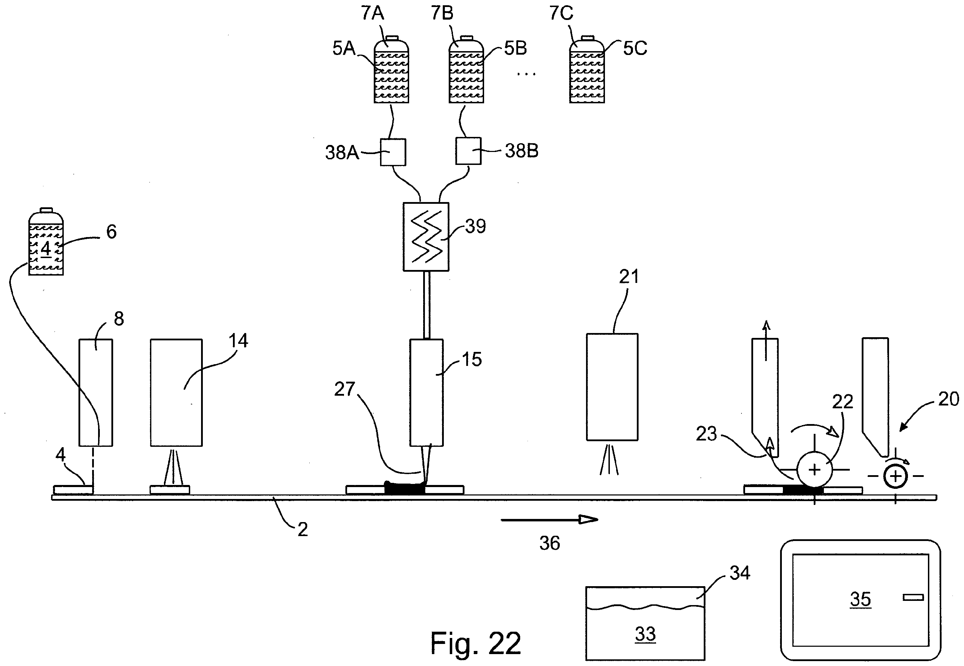

Wie in Fig. 22 zu sehen ist, kann die Beschichtungseinrichtung 15 auch über einen Mischer 39 mit mehreren zweiten Reservoirs 7A, 7B, 7C bzw. 7A', 7B', 7C' verbunden sein, in denen unterschiedliche Material-Komponenten 4A, 4B, 4C bevorratet sind. Die zweiten Reservoirs 7A, 7B, 7C sind jeweils über einen ihnen zugordneten Dosierer 38A, 38B mit der Einlassöffnungen des Mischers 39, 39' verbunden. Die Auslassöffnung des Mischers 39, 39' ist mit der zweiten Abgabeeinrichtung 15 verbunden. Steuereingänge der Dosierer 38A, 38B sind über Steuerleitungen mit der Steuerung 40 verbunden. Mit Hilfe der Steuerung 40 kann die Dosierung der einzelnen Material-Komponenten 4A, 4B, 4C während des Herstellungsprozesses des Formgegenstands 1 in Abhängigkeit von in dem Datenspeicher abgelegten, ortsabhängigen Materialdaten programmgesteuert verändert werden.

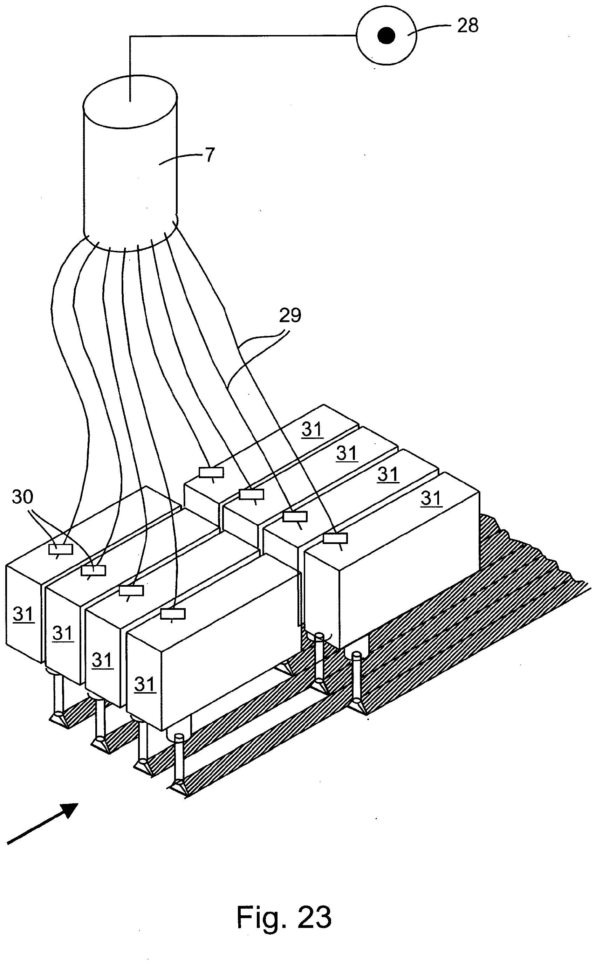

Das zweite Material 5 kann auch durch ein Mikrodosierungsverfahren in die Kavität(en) 13 eingefüllt werden. Wie in Fig. 23 zu sehen ist, ist das zweite Reservoir 7 dabei mit einer Gasdruckquelle 28, die z.B. eine Luftdruckquelle sein kann, verbunden, um das zweite Material 5 unter Druck zu setzen. Das Reservoir 7 ist über Leitungen 29, in denen jeweils ein in eine Offen- und eine Schließstellung verstellbares Ventil 30 angeordnet ist, mit einer Düse 27 zur Materialabgabe verbunden. Die Austrittsöffnung der Düse 27 wird mit ihrer Austrittsöffnung in geringem Abstand zur Basisfläche 3 angeordnet und dann derart entlang der Basisfläche 3 relativ zu dem Trägerteil 2 positioniert. Die einzelnen Ventile 30 werden jeweils derart in Abhängigkeit von den für den herzustellenden Formgegenstand 1 bereitgestellten Geometriedaten und in Abhängigkeit von der Relativposition zwischen der Düse 27 und dem Trägerteil 2 angesteuert, dass der Materialfluss des zweiten Materials 5 freigegeben wird, wenn die Austrittsöffnung der Düse 27 an der Kavität 13 positioniert ist. Der Materialfluss wird gesperrt, wenn die Austrittsöffnung der Düse 27 nicht an der Kavität 13 positioniert ist.

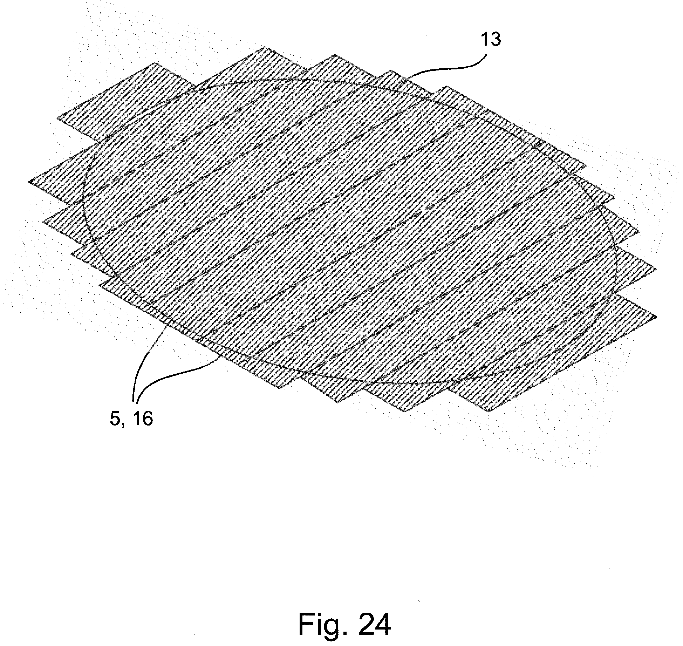

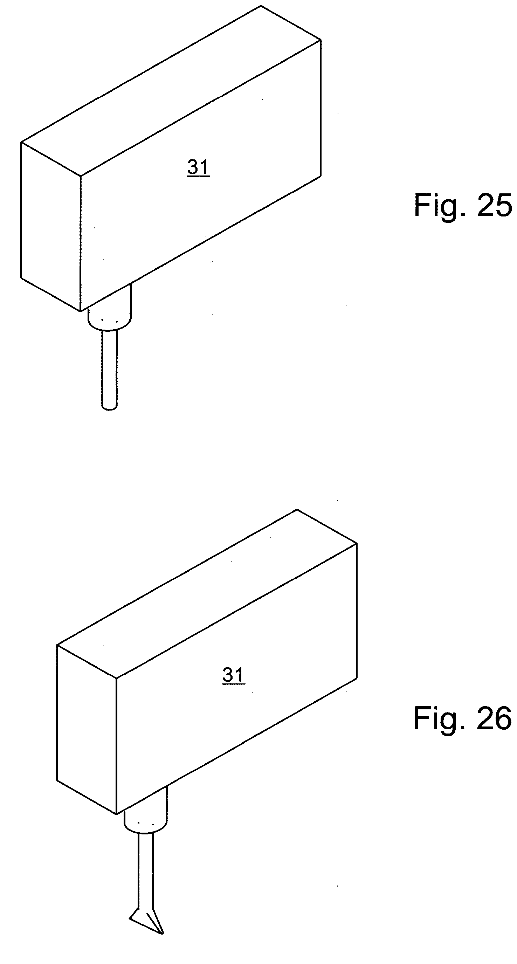

Wie in Fig. 23 zu sehen ist, können mehrere Mikrodosierungseinheiten 31 vorgesehen sein, deren Ventil 30 jeweils mit seinem Einlass über eine Leitung 29 mit dem zweiten Reservoir 7 verbunden ist. Jede Mikrodosierungseinheit 31 hat jeweils eine Düse 27, die mit dem Auslass des betreffenden Ventils 30 verbunden ist. Die Düsen 27 sind matrixförmig in mehreren Reihen und/oder mehreren Spalten angeordnet. Die Ventile 30 werden derart gesteuert, dass die Kavität 13 flächig mit dem zweiten Material 5 belegt wird (Fig. 24). Die Düse 27 kann eine runde (Fig. 25) oder eine eckige, vorzugsweise rechteckige (Fig. 26) Austrittsöffnung haben.

## Patentansprüche

1. Verfahren zum Herstellen eines dreidimensionalen Formgegenstands (1) mittels schichtweisem Materialauftrag, wobei Geometriedaten für den Formgegenstand (1), ein Trägerteil (2) mit einer Basisfläche (3) zur Aufnahme des dreidimensionalen Formgegenstands (1), ein verfestigbares flüssiges oder fließfähiges erstes Material (4) und ein verfestigbares, flüssiges, fließfähiges, pastöses oder pulverförmiges zweites Material (5) bereitgestellt werden, wobei das zweite Material (5) mindestens eine durch Behandlung mit Energie vernetzbare Hauptkomponente und einen thermisch aktivierbaren, latenten Härter umfasst, mittels dem durch Wärmeeinwirkung eine chemische Vernetzung der Hauptkomponente auslösbar ist,
a) wobei zur Bildung einer Negativform-Schicht (12) Materialportionen des fließfähigen ersten Materials (4) derart entsprechend den Geometriedaten auf die Basisfläche (3) und/oder eine darauf befindliche verfestigte Materialschicht des dreidimensionalen Formgegenstands (1) aufgebracht werden, dass die Negativform-Schicht (12) an ihrer der Basisfläche (3) abgewandten Oberfläche mindestens eine Kavität (13) hat, welche eine Negativform einer herzustellenden Materialschicht des Formgegenstands (1) aufweist,
b) wobei die Negativform-Schicht (12) verfestigt wird,
c) wobei zur Bildung einer Formgegenstands-Schicht (16) die Kavität (13) derart mit dem zweiten Material (5) befüllt wird, dass die Negativform als Positivform auf die Formgegenstands-Schicht (16) übertragen wird,
d) wobei die Hauptkomponente des in die Kavität (13) eingefüllten zweiten Materials (5) durch Behandlung mit Energie teilvernetzt und verfestigt wird,
e) wobei über eine in einem vorbestimmten Abstand zur Basisfläche (3) angeordnete Ebene überstehende Bereiche der verfestigten Negativform-Schicht (12) und/oder der verfestigten Formgegenstands-Schicht (16) durch Materialabtrag entfernt werden,
f) wobei die Schritte a) bis e) mindestens einmal wiederholt werden,
g) wobei die Hauptkomponente des aus den Formgegenstands-Schichten (16) gebildeten Formgegenstands (1) durch eine Wärmebehandlung weiter vernetzt und derart verfestigt wird, dass das zweite Material (5) eine höhere Festigkeit aufweist als das verfestigte erste Material (4) und/oder das teilvernetzte zweite Material (5), und
h) wobei die Negativform-Schichten (12) vor, während und/oder nach dem Durchführen der Wärmebehandlung von dem Formgegenstand (1) entfernt werden.

2. Verfahren nach Anspruch 1, **dadurch gekennzeichnet, dass** die Materialportionen des ersten Materials (4) vorzugsweise mittels eines Tintenstrahl-Druckverfahrens oder mittels Pulverauftragsverfahrens auf die Basisfläche und/oder die darauf befindliche verfestigte Negativform-Schicht (12) und/oder eine verfestigte Formgegenstands-Schicht (16) aufgebracht werden, und das erste Material (4) ein durch Einwirkung von Energie verfestigbares Material ist, das zum Verfestigen der Negativform-Schicht (12) mit der Energie beaufschlagt wird.

3. Verfahren nach Anspruch 1 oder 2, **dadurch gekennzeichnet, dass** die Hauptkomponente des zweiten Materials mindestens ein Epoxid, wenigstens ein Oxetan, zumindest ein funktionales (Meth)acrylat, mindestens einen Vinylether oder eine Mischung aus mindestens zwei dieser Stoffen umfasst.

4. Verfahren nach einem der Ansprüche 1 bis 3, **dadurch gekennzeichnet, dass** der latente Härter Dicyandiamid und/oder Säureanhydrid und/oder mindestens ein blockiertes Isocyanat und/oder wenigstens ein Carbodiimid enthält.

5. Verfahren nach einem der Ansprüche 1 bis 4, **dadurch gekennzeichnet, dass** die Konzentration des Härters zwischen 0,2 und 5% Volumenprozent, insbesondere zwischen 1,2 und 4% Volumenprozent und bevorzugt zwischen 2,2 und 3% Volumenprozent des zweiten Materials beträgt.

6. Verfahren nach einem der Ansprüche 1 bis 5, **dadurch gekennzeichnet, dass** das zweite Material (5) mittels eines teilselektiven Beschichtungsverfahrens derart in Abhängigkeit von den Geometriedaten auf die Negativform-Schicht (12) aufgetragen wird, dass zumindest eine Materialportion des fließfähigen, pastösen oder pulverförmigen zweiten Materials in die mindestens eine Kavität (13) vollfüllend abgegeben wird und vorzugsweise mindestens eine außerhalb der Kavität befindliche Stelle der Negativform-Schicht nicht mit dem zweiten Material (5) in Kontakt gebracht wird.

7. Verfahren nach einem der Ansprüche 1 bis 6, **dadurch gekennzeichnet, dass** das zweite Material (5) mit einem Druck beaufschlagt wird und das auf diese Weise unter Druck gesetzte zweite Material (5) über wenigstens ein Ventil (30) zu mindestens einer Düse (27) geleitet wird, dass die Austrittsöffnung der Düse entlang der Basisfläche (3) relativ zu dem Trägerteil (2) positioniert und das Ventil (30) derart in Abhängigkeit von den für den herzustellenden Formgegenstand (1) bereitgestellten Geometriedaten und in Abhängigkeit von der Relativposition zwischen der Düse (27) und dem Trägerteil (2) angesteuert wird, dass der Materialfluss freigegeben wird, wenn die Austrittsöffnung derart an der Kavität (13) positioniert ist, dass das zweite Material (5) von der Düse (27) in die Kavität (13) abgegeben werden kann, und dass der Materialfluss gesperrt wird, wenn die Austrittsöffnung derart positioniert ist, dass das zweite Material (5) nicht von der Düse (27) in die Kavität (13) abgegeben werden kann.

8. Verfahren nach einem der Ansprüche 1 bis 6, **dadurch gekennzeichnet, dass** das zweite Material (5) mittels eines Flexodruck-, Tiefdruck-, Offsetdruck-, Siebdruck-, Lasertransfer-, Mikrodosierungsverfahrens und/oder mittels eines Rakels (24) und/oder Kammerrakels und/oder Pulverauftragsverfahrens nicht selektiv oder teil-selektiv in die Kavität (13) eingefüllt wird.

9. Verfahren nach einem der Ansprüche 1 bis 8, **dadurch gekennzeichnet, dass** das in die Kavität (13) eingefüllte zweite Material (5) vor dem Teilvernetzen seiner Hauptkomponente derart mit Feststoffpartikeln, insbesondere mit Fasern, in Kontakt gebracht wird, dass die Feststoffpartikel ganz und/oder teilweise in das in der Kavität (13) befindliche zweite Material (5) eindringen.

10. Verfahren nach Anspruch 9, **dadurch gekennzeichnet, dass** die Feststoffpartikel als Feststoffpartikel-Schicht auf die Mantelfläche einer Übertragungswalze aufgebracht werden, und dass die beschichtete Mantelfläche danach derart dicht an der Oberfläche des in die Kavität (13) eingefüllten zweiten Materials (5) positioniert wird, dass die Feststoffpartikel-Schicht mit dem zweiten Material (5) in Kontakt gerät und die Mantelfläche der Übertragungswalze von dem zweiten Material (5) beabstandet ist.

11. Verfahren nach einem der Ansprüche 1 bis 10, **dadurch gekennzeichnet, dass** die oberste verfestigte Negativform-Schicht (12) und/oder die oberste verfestigte Formgegenstands-Schicht (16) von dem bei dem Materialabtrag auftretenden Abtrag gereinigt wird.

12. Verfahren nach einem der Ansprüche 1 bis 11, **dadurch gekennzeichnet, dass** das die Basisfläche (3) aufweisende Trägerteil (2) während des Materialauftrags und gegebenenfalls während des Verfestigens der Materialien (4, 5) um eine Rotationsachse (11) gedreht und vorzugsweise entlang der Rotationsachse (11) verschoben wird.

13. Verfahren nach einem der Ansprüche 1 bis 12, **dadurch gekennzeichnet, dass** ein Lösungsmittel (33) bereitgestellt wird, in dem das verfestigte erste Material (4) lösbar ist, und dass die Negativform-Schichten (12) vor, während und/oder nach dem Durchführen der Wärmebehandlung derart mit dem Lösungsmittel (33) in Kontakt gebracht werden, dass sich das verfestigte erste Material (4) in dem Lösungsmittel (33) löst.

14. Verfahren nach einem der Ansprüche 1 bis 12, **dadurch gekennzeichnet, dass** die Negativform-Schichten (12) vor, während und/oder nach dem Durchführen der Wärmebehandlung durch eine Phasenumwandlung des verfestigten ersten Materials (4) von dem Formgegenstand (1) entfernt werden.

## Claims

1. Method for producing a three-dimensional shaped object (1) by means of layer-by-layer material application, wherein geometry data for the shaped object (1), a support part (2) having a base surface (3) for holding the three-dimensional shaped object (1), a liquid or flowable first material (4) that can be solidified, and a liquid, flowable, paste-like or powder-form second material (5) that can be solidified are made available, wherein the second material (5) comprises at least one main component that can be cross-linked by means of treatment with energy, and a latent hardener that can be thermally activated, by means of which chemical crosslinking of the main component can be triggered as the result of the action of heat,
a) wherein for the formation of a negative-shape layer (12), material portions of the flowable first material (4) are applied to the base surface (3) and/or to a solidified material layer of the three-dimensional shaped object (1) situated on this surface, in accordance with the geometry data, in such a manner that the negative-shape layer (12) has at least one cavity (13) on its surface facing away from the base surface (3), which cavity has a negative shape of a material layer of the shaped object (1) to be produced,
b) wherein the negative-shape layer (12) is solidified,
c) wherein for the formation of a shaped-object layer (16), the cavity (13) is filled with the second material (5) in such a manner that the negative shape is transferred to the shaped-object layer (16) as a positive shape,
d) wherein the main component of the second material (5) filled into the cavity (13) is partially cross-linked by means of treatment with energy, and solidified,
e) wherein regions of the solidified negative-shape layer (12) and/or of the solidified shaped-object layer (16) projecting beyond a plane arranged at a predetermined distance from the base surface (3) are removed by means of material removal,
f) wherein steps a) to e) are repeated at least once,
g) wherein the main component of the shaped object (1) formed from the shaped-object layers (16) is further cross-linked by means of heat treatment, and solidified, in such a manner that the second material (5) has a greater strength than the solidified first material (4) and/or the partially cross-linked second material (5),
and
h) wherein the negative-shape layers (12) are removed from the shaped object (1) before, while and/or after the heat treatment is carried out.

2. Method according to Claim 1, **characterized in that** the material portions of the first material (4) are applied to the base surface and/or to the solidified negative-shape layer (12) situated on this surface and/or to a solidified shaped-object layer (16), preferably by means of an inkjet printing method or by means of a powder application method, and the first material (4) is a material that can be solidified by means of the application of energy, to which the energy is applied so as to solidify the negative-shape layer (12).

3. Method according to Claim 1 or 2, **characterized in that** the main component of the second material comprises at least one epoxy, at least one oxetane, at least one functional (meth)acrylate, at least one vinyl ether or a mixture of at least two of these substances.

4. Method according to one of Claims 1 to 3, **characterized in that** the latent hardener contains dicyandiamide and/or acid anhydride and/or at least one blocked isocyanate and/or at least one carbodiimide.

5. Method according to one of Claims 1 to 4, **characterized in that** the concentration of the hardener amounts to between 0.2 and 5% volume-percent, in particular between 1.2 and 4% volume-percent, and preferably between 2.2 and 3% volume-percent of the second material.

6. Method according to one of Claims 1 to 5, **characterized in that** the second material (5) is applied to the negative-shape layer (12) by means of a partially selective coating method, as a function of the geometry data, in such a manner that at least one material portion of the flowable, paste-like or powder-form second material is dispensed into the at least one cavity (13), filling it completely, and preferably at least one location of the negative-shape layer situated outside of the cavity is not brought into contact with the second material (5).

7. Method according to one of Claims 1 to 6, **characterized in that** the second material (5) has a pressure applied to it, and the second material (5) put under pressure in this manner is passed to at least one jet (27) by way of at least one valve (30), that the exit opening of the jet is positioned along the base surface (3) relative to the support part (2), and the valve (30) is controlled as a function of the geometry data made available for the shaped object (1) to be produced, and as a function of the relative position between the jet (27) and the support part (2), in such a manner that the material flow is released when the exit opening is positioned at the cavity (13), in such a manner that the second material (5) can be dispensed into the cavity (13) by the jet (27), and that the material flow is blocked when the exit opening is positioned in such a manner that the second material (5) cannot be dispensed into the cavity (13) by the jet (27).

8. Method according to one of Claims 1 to 6, **characterized in that** the second material (5) is filled into the cavity (13) by means of a flexographic printing method, a gravure printing method, an offset printing method, a screen printing method, a laser transfer method, a micro-metering method and/or by means of a doctor blade (24) and/or a chamber doctor blade and/or a powder application method, in non-selective or partially selective manner.

9. Method according to one of Claims 1 to 8, **characterized in that** the second material (5) filled into the cavity (13) is brought into contact with solid particles, particularly with fibers, before its main component is partially cross-linked, in such a manner that the solid particles penetrate, in whole and/or in part, into the second material (5) situated in the cavity (13) .

10. Method according to Claim 9, **characterized in that** the solid particles are applied to the mantle surface of a transfer roll as a solid-particle layer, and that the coated mantle surface is afterward positioned so close to the surface of the second material (5) filled into the cavity (13) that the solid-particle layer comes into contact with the second material (5), and the mantle surface of the transfer roll is at a distance from the second material (5) .

11. Method according to one of Claims 1 to 10, **characterized in that** the uppermost solidified negative-shape layer (12) and/or the uppermost solidified shaped-object layer (16) is/are cleaned to remove the waste that occurs during material removal.

12. Method according to one of Claims 1 to 11, **characterized in that** the support part (2) having the base surface (3) is rotated about an axis of rotation (11) during the material application and, if necessary, during solidification of the materials (4, 5), and preferably displaced along the axis of rotation (11).

13. Method according to one of Claims 1 to 12, **characterized in that** a solvent (33) is made available, in which the solidified first material (4) is soluble, and that the negative-shape layers (12) are brought into contact with the solvent (33) before, while and/or after the heat treatment is carried out, in such a manner that the solidified first material (4) dissolves in the solvent (33).

14. Method according to one of Claims 1 to 12, **characterized in that** the negative-shape layers (12) are removed from the shaped object (1) before, while and/or after the heat treatment is carried out, by means of a phase conversion of the solidified first material (4).

## Revendications

1. Procédé de fabrication d'un objet moulé tridimensionnel (1) au moyen d'une application de matériau par couches, dans lequel des données géométriques pour l'objet moulé (1), une partie de support (2) avec une surface de base (3) pour recevoir l'objet moulé tridimensionnel (1), un premier matériau (4) liquide ou fluide solidifiable et un deuxième matériau (5) liquide, fluide, pâteux ou pulvérulent solidifiable sont fournis, dans lequel le deuxième matériau (5) comprend au moins un composant principal réticulable par traitement avec de l'énergie et un durcisseur latent activable thermiquement, au moyen duquel une réticulation chimique du composant principal peut être déclenchée par l'action de chaleur,
a) dans lequel, pour former une couche de forme négative (12), des portions de matériau du premier matériau fluide (4) sont appliquées sur la surface de base (3) et/ou sur une couche de matériau solidifiée de l'objet moulé tridimensionnel (1) se trouvant sur celle-ci, conformément aux données géométriques, de telle sorte que la couche de forme négative (12) a au moins une cavité (13) sur sa surface détournée de la surface de base (3), qui présente une forme négative d'une couche de matériau à fabriquer de l'objet moulé (1),
b) dans lequel la couche de forme négative (12) est solidifiée,
c) dans lequel la cavité (13) est remplie avec le deuxième matériau (5) pour former une couche d'objet moulé (16) de telle sorte que la forme négative est transférée en tant que forme positive sur la couche d'objet moulé (16),
d) dans lequel le composant principal du deuxième matériau (5) introduit dans la cavité (13) est partiellement réticulé et solidifié par traitement avec de l'énergie,
e) dans lequel des zones de la couche de forme négative (12) solidifiée et/ou de la couche d'objet moulé (16) solidifiée dépassant d'un plan agencé à une distance prédéterminée de la surface de base (3) sont retirées par enlèvement de matériau,
f) dans lequel les étapes a) à e) étant répétées au moins une fois,
g) dans lequel le composant principal de l'objet moulé (1) formé à partir des couches d'objet moulé (16) est davantage réticulé par un traitement thermique et solidifié de telle sorte que le deuxième matériau (5) présente une résistance plus élevée que le premier matériau solidifié (4) et/ou le deuxième matériau partiellement réticulé (5), et
h) dans lequel les couches de forme négative (12) sont retirées de l'objet moulé (1) avant, pendant et/ou après la réalisation du traitement thermique.

2. Procédé selon la revendication 1, **caractérisé en ce que** les portions de matériau du premier matériau (4) sont appliquées de préférence au moyen d'un procédé d'impression à jet d'encre ou au moyen d'un procédé d'application de poudre sur la surface de base et/ou sur la couche de forme négative (12) solidifiée se trouvant sur celle-ci et/ou sur une couche d'objet moulé (16) solidifiée, et le premier matériau (4) est un matériau solidifiable par l'action d'énergie, qui est soumis à l'énergie pour solidifier la couche de forme négative (12) .

3. Procédé selon la revendication 1 ou 2, **caractérisé en ce que** le composant principal du deuxième matériau comprend au moins un époxyde, au moins un oxétane, au moins un (méth)acrylate fonctionnel, au moins un éther vinylique ou un mélange d'au moins deux de ces substances.

4. Procédé selon l'une quelconque des revendications 1 à 3, **caractérisé en ce que** le durcisseur latent contient du dicyandiamide et/ou un anhydride d'acide et/ou au moins un isocyanate bloqué et/ou au moins un carbodiimide.

5. Procédé selon l'une quelconque des revendications 1 à 4, **caractérisé en ce que** la concentration du durcisseur est comprise entre 0,2 et 5 % en volume, notamment entre 1,2 et 4 % en volume et de préférence entre 2,2 et 3 % en volume du deuxième matériau.

6. Procédé selon l'une quelconque des revendications 1 à 5, **caractérisé en ce que** le deuxième matériau (5) est appliqué sur la couche de forme négative (12) au moyen d'un procédé de revêtement partiellement sélectif, en fonction des données géométriques, de telle sorte qu'au moins une portion de matériau du deuxième matériau fluide, pâteux ou pulvérulent est délivrée dans l'au moins une cavité (13) en la remplissant entièrement et, de préférence, au moins un emplacement de la couche de forme négative se trouvant à l'extérieur de la cavité n'est pas mis en contact avec le deuxième matériau (5).

7. Procédé selon l'une quelconque des revendications 1 à 6, **caractérisé en ce que** le deuxième matériau (5) est soumis à une pression et le deuxième matériau (5) ainsi mis sous pression est dirigé vers au moins une buse (27) par le biais d'au moins une soupape (30), **en ce que** l'ouverture de sortie de la buse est positionnée le long de la surface de base (3) par rapport à la partie de support (2) et la soupape (30) est commandée en fonction des données géométriques fournies pour l'objet moulé (1) à fabriquer et en fonction de la position relative entre la buse (27) et la partie de support (2), de telle sorte que le flux de matériau est libéré lorsque l'ouverture de sortie est positionnée sur la cavité (13) de telle sorte que le deuxième matériau (5) peut être délivré par la buse (27) dans la cavité (13), et de telle sorte que le flux de matériau est bloqué lorsque l'ouverture de sortie est positionnée de telle sorte que le deuxième matériau (5) ne peut pas être délivré par la buse (27) dans la cavité (13).

8. Procédé selon l'une quelconque des revendications 1 à 6, **caractérisé en ce que** le deuxième matériau (5) est introduit de manière non sélective ou partiellement sélective dans la cavité (13) au moyen d'un procédé d'impression flexographique, d'impression en héliogravure, d'impression offset, de sérigraphie, de transfert laser, de microdosage et/ou au moyen d'une racle (24) et/ou d'une racle à chambre et/ou d'un procédé d'application de poudre.

9. Procédé selon l'une quelconque des revendications 1 à 8, **caractérisé en ce que** le deuxième matériau (5) introduit dans la cavité (13) est mis en contact avec des particules solides, notamment des fibres, avant la réticulation partielle de son composant principal, de telle sorte que les particules solides pénètrent totalement et/ou partiellement dans le deuxième matériau (5) se trouvant dans la cavité (13).

10. Procédé selon la revendication 9, **caractérisé en ce que** les particules solides sont appliquées sous forme de couche de particules solides sur la surface d'enveloppe d'un rouleau de transfert, et **en ce que** la surface d'enveloppe revêtue est ensuite positionnée à proximité de la surface du deuxième matériau (5) introduit dans la cavité (13) de telle sorte que la couche de particules solides entre en contact avec le deuxième matériau (5) et la surface d'enveloppe du rouleau de transfert est espacée du deuxième matériau (5).

11. Procédé selon l'une quelconque des revendications 1 à 10, **caractérisé en ce que** la couche de forme négative solidifiée supérieure (12) et/ou la couche d'objet moulé solidifiée supérieure (16) est nettoyée du matériau enlevé produit lors de l'enlèvement de matériau.

12. Procédé selon l'une quelconque des revendications 1 à 11, **caractérisé en ce que** la partie de support (2) présentant la surface de base (3) est tournée autour d'un axe de rotation (11) et de préférence déplacée le long de l'axe de rotation (11) pendant l'application de matériau et éventuellement pendant la solidification des matériaux (4, 5).

13. Procédé selon l'une quelconque des revendications 1 à 12, **caractérisé en ce qu'**un solvant (33) est fourni, dans lequel le premier matériau solidifié (4) est soluble, et **en ce que** les couches de forme négative (12) sont mises en contact avec le solvant (33) avant, pendant et/ou après la réalisation du traitement thermique, de telle sorte que le premier matériau solidifié (4) se dissout dans le solvant (33).

14. Procédé selon l'une quelconque des revendications 1 à 12, **caractérisé en ce que** les couches de forme négative (12) sont retirées de l'objet moulé (1) avant, pendant et/ou après la réalisation du traitement thermique par une transformation de phase du premier matériau solidifié (4) .
